# EUROPEAN PATENT APPLICATION

(11) **EP 4 661 477 A1**
(43) Date of publication of application: **10.12.2025**
(21) Application number: 23919663.7
(22) Date of filing: 31.01.2023
(51) Int. Cl.: H04W 24/10, H04W 72/0457, H04W 72/21, H04W 72/23

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2023/003106
(87) International publication number: WO 2024/161523

(57) **Abstract**

A terminal according to one aspect of the present disclosure includes a control section that measures at least one of a Layer 1 (L1)-Reference Signal Received Power (RSRP) and an L1-Signal to Interference plus Noise Ratio (SINR) of a reference signal (RS) over one or more frequencies or one or more cells, and a transmitting section that transmits a channel state information (CSI) report including at least one of the L1-RSRP and the L1-SINR. One aspect of the present disclosure allows CSI measurement or reporting at/in a plurality of frequencies/cells to be performed appropriately.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For radio communication systems, it is studied that one or a plurality of cells / transmission/reception points (TRPs) (multi-TRP (MTRP)) perform downlink (DL) transmission to a terminal (user terminal, User Equipment (UE)).

In a case where multi-TRP are applied, there is a possibility that signaling of at least one of layer 1 and layer 2 switches a serving cell to a cell with a PCI different from that of the serving cell (additional cell / candidate cell) (L1/L2 inter-cell mobility (layer1/layer2 inter-cell mobility)).

Meanwhile, in a case where frequencies of respective PCIs are different from each other, how configuration related to CSI measurement or reporting at/in respective frequencies/cells (for example, measurement or reporting of an L1-RSRP or an L1-SINR) is performed and how the measurement or reporting is performed are indefinite. Unless the measurement or reporting at/in the plurality of frequencies/cells is performed appropriately, problems, such as communication throughput reduction, may be caused.

In view of this, an object of the present disclosure is to provide a terminal, a radio communication method, and a base station that can appropriately perform CSI measurement or reporting at/in a plurality of frequencies/cells.

### Solution to Problem

A terminal according to one aspect of the present disclosure includes a control section that measures at least one of a Layer 1 (L1)-Reference Signal Received Power (RSRP) and an L1-Signal to Interference plus Noise Ratio (SINR) of a reference signal (RS) over one or more frequencies or one or more cells, and a transmitting section that transmits a channel state information (CSI) report including at least one of the L1-RSRP and the L1-SINR.

### Advantageous Effects of Invention

One aspect of the present disclosure allows CSI measurement or reporting at/in a plurality of frequencies/cells to be performed appropriately.

### Brief Description of Drawings

[FIG. 1] FIG. 1A is a diagram to show an example of movement of a UE in Rel. 17. FIG. 1B is a diagram to show an example of movement of a UE in Rel. 18.
[FIG. 2] FIG. 2 is a diagram to show an example of association between a serving cell and a candidate cell.
[FIG. 3] FIG. 3A is a diagram to show a second example of Option 2. FIG. 3B is a diagram to show a third example of Option 2.
[FIG. 4] FIG. 4 is a diagram to show Example 1 of serving cell switching.
[FIG. 5] FIG. 5 is a diagram to show Example 2 of the serving cell switching.
[FIG. 6] FIG. 6 is a diagram to show Example 3 of the serving cell switching.
[FIG. 7] FIG. 7 is a diagram to show an outline of a CSI report configuration of RRC.
[FIG. 8] FIG. 8 is a diagram to show part of a CSI resource configuration for Rel. 17.
[FIG. 9] FIG. 9 is a diagram to show part of a CSI-SSB resource set for Rel. 17.
[FIG. 10] FIG. 10 is a diagram to show configuration related to L3 measurement/reporting for Rel. 17.
[FIG. 11] FIG. 11 is a diagram to show an example of RSRP values at a plurality of frequencies.
[FIG. 12] FIG. 12 is a diagram to show an example of CSI-SSB-ResourceSet in Option 1 for enhancement of L1 measurement/report configuration.
[FIG. 13] FIG. 13 is a diagram to show an example of CSI-SSB-ResourceSet in Option 2 for enhancement of L1 measurement/report configuration.
[FIG. 14] FIG. 14 is a diagram to show an example of a CSI report at a plurality of frequencies.
[FIG. 15] FIG. 15 is a diagram to show an example of a method for CSI measurement/reporting at a plurality of frequencies.
[FIG. 16] FIG. 16 is a diagram to show a first example of re-indexing indices.
[FIG. 17] FIG. 17 is a diagram to show a first concrete example of a CSI report including re-indexing indices.
[FIG. 18] FIG. 18 is a diagram to show a second concrete example of the CSI report including the re-indexing indices.
[FIG. 19] FIG. 19 is a diagram to show a third concrete example of the CSI report including the re-indexing indices.
[FIG. 20] FIG. 20 is a diagram to show a CSI report in Example Report 2-1.
[FIG. 21] FIG. 21 is a diagram to show a CSI report in Example Report 2-2.
[FIG. 22] FIG. 22 is a diagram to show an example of a CSI report using Option 1 of Aspect 3-1.
[FIG. 23] FIG. 23 is a diagram to show an example of a CSI report using Option 2 of Aspect 3-1.
[FIG. 24] FIG. 24 is a flowchart to show an example of processing of a fifth/sixth embodiment.
[FIG. 25] FIG. 25 is a diagram to show an example of a schematic structure of a radio communication system according to one embodiment.
[FIG. 26] FIG. 26 is a diagram to show an example of a structure of a base station according to one embodiment.
[FIG. 27] FIG. 27 is a diagram to show an example of a structure of a user terminal according to one embodiment.
[FIG. 28] FIG. 28 is a diagram to show an example of a hardware structure of the base station and the user terminal according to one embodiment.
[FIG. 29] FIG. 29 is a diagram to show an example of a vehicle according to one embodiment.

### Description of Embodiments

### (CSI Report)

In NR, a UE measures a channel state by using a given reference signal (or a resource for the reference signal), and feeds back (reports) channel state information (CSI) to a base station.

The UE may measure the channel state by using a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), or the like.

The CSI-RS resource may include at least one of a non-zero power (NZP) CSI-RS and CSI-Interference Management (IM). The SS/PBCH block is a block including a synchronization signal (for example, a primary synchronization signal (PSS), a secondary synchronization signal (SSS)) and a PBCH (and a corresponding DMRS), and may be referred to as an SS block (SSB) or the like. An SSB index may be given to a temporal location of the SSB in a half frame.

Note that the CSI may include at least one of a channel quality indicator (CQI), a precoding matrix indicator (PMI), a CSI-RS resource indicator (CRI), an SS/PBCH block resource indicator (SS/PBCH Block Indicator (SSBRI)), a layer indicator (LI), a rank indicator (RI), Layer 1 (L1)-Reference Signal Received Power (RSRP) (reference signal received power in Layer 1), L1-Reference Signal Received Quality (RSRQ), an L1-Signal to Interference plus Noise Ratio (SINR), an L1-Signal to Noise Ratio (SNR), and the like.

The CSI may have a plurality of parts. A first part of the CSI (CSI part 1) may include information with a relatively small number of bits (for example, the RI). A second part of the CSI (CSI part 2) may include information with a relatively large number of bits (for example, the CQI), such as information determined based on CSI part 1.

As a method for feeding back the CSI, (1) periodic CSI (P-CSI) reporting, (2) aperiodic CSI (A (AP)-CSI) reporting, (3) semi-persistent (semi-permanent) CSI reporting (SP-CSI) reporting, and the like are under study.

The UE may be notified of information related to a CSI report (which may be referred to as CSI report configuration information) by using higher layer signaling, physical layer signaling (for example, downlink control information (DCI)), or a combination of these. The CSI report configuration information may be configured by using an RRC information element "CSI-ReportConfig," for example.

For example, the CSI report configuration information may include information related to a report periodicity, offset, and the like, and these may be represented by a given time unit (slot unit, subframe unit, symbol unit, or the like). The CSI report configuration information may include a configuration ID (CSI-ReportConfigId). The configuration ID may specify a parameter, such as a type of CSI reporting method (whether the type is SP-CSI or not, or the like) and a report periodicity. The CSI report configuration information may include information (CSI-ResourceConfigId) indicating which signal (or which signal resource) measured CSI is to be reported with.

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a given channel/signal, and this RS may be referred to as a QCL source of QCL type X in the TCI state.

### (L1/L2 Inter-cell Mobility)

As described above, it is studied that the UE performs UL transmission to one or a plurality of cells/TRPs. As procedure in this case, scenario 1 or scenario 2 below is conceivable. Note that, in the present disclosure, a serving cell may be interpreted as a TRP in a serving cell. Layer1/layer2 (L1/L2) and DCI / Medium Access Control Control Element (MAC CE) may be interchangeably interpreted. In the present disclosure, a PCI different from a physical cell ID (Physical Cell Identity (PCI)) of a current serving cell is sometimes simply described as a "different PCI." A non-serving cell, a cell having a different PCI, and an additional cell may be interchangeably interpreted.

### <Scenario 1>

Scenario 1 corresponds to inter-cell mobility for multi-TRP, for example, but may be a scenario not corresponding to inter-cell mobility for multi-TRP.
(1) The UE receives, from a serving cell, an SSB configuration for beam measurement in a TRP corresponding to a PCI different from that of the serving cell, and a configuration including a resource for the different PCI, the configuration being necessary for using a radio resource for data transmission/reception.
(2) The UE performs beam measurement in the TRP corresponding to the different PCI, and reports a result of the beam measurement to the serving cell.
(3) Based on the report, a transmission configuration indication (TCI) state associated with the TRP corresponding to the different PCI is activated by L1/L2 signaling from the serving cell.
(4) The UE performs transmission/reception by using a UE-dedicated channel on the TRP corresponding to the different PCI.
(5) The UE is required to cover the serving cell at all times including a case of multi-TRP. The UE is required to use a common channel (broadcast control channel (BCCH), paging channel (PCH)) or the like from the serving cell, as with conventional systems.

In scenario 1, when the UE performs signal transmission/reception to/from an additional cell/TRP (TRP corresponding to a PCI of the additional cell), the serving cell (serving cell assumption in the UE) is not changed. The serving cell configures, for the UE, a higher layer parameter associated with a PCI of a non-serving cell. Scenario 1 may be applied to Rel. 17, for example.

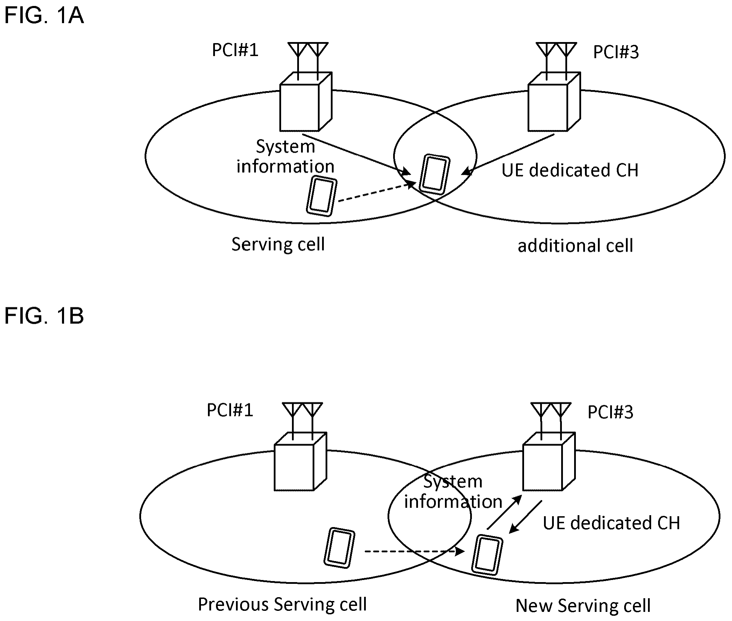

FIG. 1A is a diagram to show an example of movement of the UE in Rel. 17. Assume that the UE moves from a cell with PCI #1 (serving cell) to a cell with PCI #3 (additional cell) (overlapping the serving cell). In this case, in Rel. 17, the serving cell is not switched by L1/L2. The additional cell is a cell having an additional PCI different from the PCI of the serving cell. The UE can receive/transmit a UE-dedicated channel from the additional cell. The UE is required to be present in coverage of the serving cell to receive a UE-common channel (for example, system information / paging / short message).

### <Scenario 2>

In scenario 2, L1/L2 inter-cell mobility is applied. The L1/L2 inter-cell mobility enables serving cell change to be performed by using a function, such as beam control, without RRC reconfiguration. In other words, the L1/L2 inter-cell mobility enables transmission/reception to/from an additional cell to be performed without handover. A data communication inhibiting period, such as RRC reconnection necessary for handover, occurs, and thus the L1/L2 inter-cell mobility not requiring handover is applied, thereby allowing data communication to be continued even in a case of serving cell change. Scenario 2 may be applied to Rel. 18, for example. In scenario 2, the following procedure is performed, for example.
(1) For beam measurement / serving cell change, the UE receives, from a serving cell, an SSB configuration for a cell (additional cell) having a different PCI.
(2) The UE performs beam measurement in the cell using the different PCI, and reports a result of the measurement to the serving cell.
(3) The UE may receive a configuration of the cell having the different PCI (serving cell configuration) via higher layer signaling (for example, RRC). In other words, configuration related to serving cell change may be performed beforehand. This configuration may be performed together with or separately from the configuration in (1).
(4) Based on the report described above, a TCI state for the cell having the different PCI may be activated by L1/L2 signaling in accordance with the serving cell change. The activation of the TCI state and the serving cell change may be performed separately.
(5) The UE changes the serving cell (serving cell assumption), and uses a preconfigured UE-dedicated channel and the TCI state to initiate reception/transmission.

In other words, in scenario 2, the serving cell (serving cell assumption in the UE) is updated by the L1/L2 signaling. Scenario 2 may be applied to Rel. 18.

FIG. 1B is a diagram to show an example of movement of the UE in Rel. 18. In Rel. 18, a serving cell is switched by L1/L2. The UE can receive/transmit a UE-dedicated channel/common channel from/to a new serving cell. The UE may be outside of coverage of the previous serving cell.

### (Configuration of Plurality of Candidate Cells)

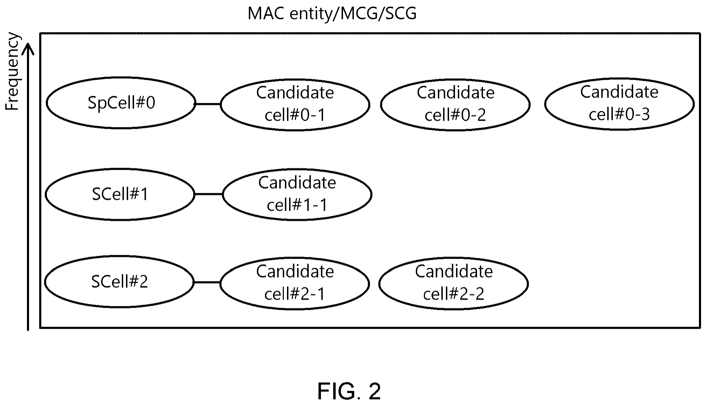

FIG. 2 is a diagram to show an example of association between the serving cell and a candidate cell. Assume that SpCell #0, SCell #1, or SCell #2 is the serving cell. Note that the SpCell means a special cell (including a primary cell (PCell) and a primary secondary cell (PSCell)). The SCell means a secondary cell. SpCell #0 is associated with candidate cell #0-1, candidate cell #0-2, and candidate cell #0-3. SCell #1 is associated with candidate cell #1-1. SCell #2 is associated with candidate cells #2-1 and 2-2. In this manner, one or more candidate cells (candidate serving cells) may be associated with the serving cell.

For configuration of cells as candidates (candidate cells) in a case where the serving cell is changed, Options 1 and 2 below are conceivable, for example.

### <Option 1>

As in inter-cell mobility of Rel. 17, information in ServingCellConfig may include information related to a plurality of candidate cells. This case requires that the plurality of candidate cells share the same configuration of a PDCCH/PDSCH/UL or the like as that for the serving cell.

For example, in the inter-cell mobility of Rel. 17, "mimoParam-r17" is added below ServingCellConfig to add PCI configuration information. mimoParam-r17 may include additionaIPCI-ToAddModList-r17 as an information list of additional SSBs each having a PCI different from a PCI of the serving cell. The same configuration as that for the serving cell may be applied to the candidate cells (additional cells, cells with additionalPCI), except for some information.

### <Option 2>

A plurality of candidate cells may be provided with full configuration (for example, ServingCellConfig) corresponding to the respective cells, and may be associated with each serving cell by reusing a carrier aggregation (CA) configuration framework. In other words, the candidate cells may not share configuration information with the serving cell, and may be provided with other configuration. The UE is provided with full configuration for the respective candidate cells, and thus can perform appropriate communication with the candidate cell.

The CA configuration framework can configure an SpCell and add a plurality of SCells, for each cell group. Reusing the CA framework may configure a serving cell and configure a plurality of candidate cells, for each cell group for L1/L2 inter-cell mobility. The candidate cells may be activated/deactivated by a MAC CE. The MAC CE may activate/deactivate TCI information corresponding to the candidate cells to activate/deactivate the candidate cells. It is conceivable that this method is beneficial for reducing complexity of UE operation.

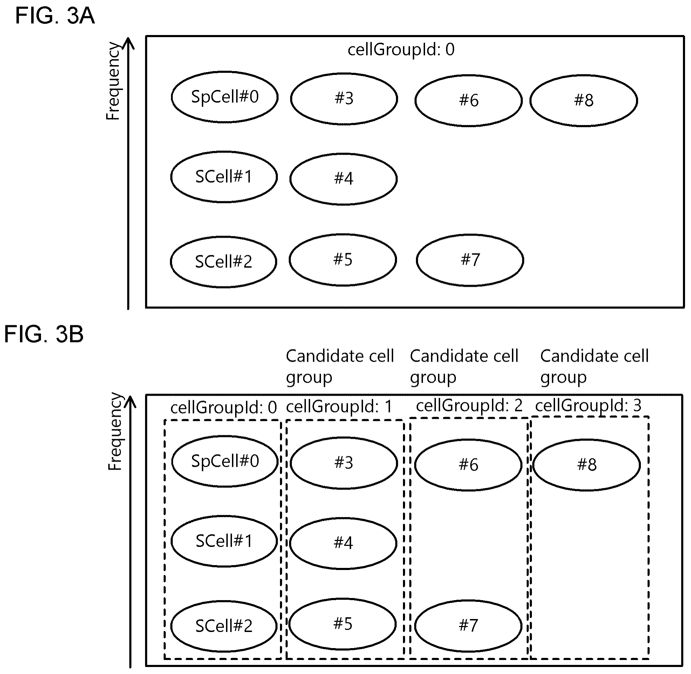

FIG. 3A is a diagram to show a first example of Option 2. In the example of FIG. 3A, a common candidate cell pool for cell switching in an MCG/SCG is applied to candidate cells. In other words, the candidate cells are handled as one pool (group) irrespective of a frequency band.

FIG. 3B is a diagram to show a second example of Option 2. In the example of FIG. 3B, a plurality of cell groups are configured, and cell group switching can be performed by L1/L2 signaling. Candidate cell(s) are configured for each cell group, and a configuration of each group includes indices of corresponding SpCell and SCell.

### (Signaling for Serving Cell Change Indication)

Implicit or explicit signaling for serving cell change indication will be described.

### {Aspect 1}

In Aspect 1, implicit signaling for serving cell change indication will be described.

### {{Option 1-1}}

When a specific control resource set (CORESET) (for example, at least one of CORESET #0, a CORESET with CH5 Type 0-CSS, and a CORESET with CH6/CH7/CH8 CSS) is indicated (activated) by a MAC CE, together with one or more TCI states associated with a cell with a PCI different from a PCI of a serving cell (when, for the specific CORESET, one or more TCI states associated with a cell with a PCI different from the PCI of the serving cell are indicated/activated by the MAC CE), the UE may judge to change the serving cell to another cell (cell x, cell having a different PCI). In other words, this activation may implicitly indicate that the serving cell is changed to another cell.

In this case, the UE may update, to the same TCI state as the above-described activated TCI state, a beam for another CORESET ID, another CORESET using CH6/CH7/CH8, or another CORESET using a CSS.

### {{Option 1-2}}

In a case where, when the MAC CE activates/deactivates PDSCH TCI states, all the TCI states activated by the MAC CE are associated with same cell x having a PCI different from the PCI of the serving cell, the UE may judge to change the serving cell to another cell (cell x). In other words, this association may implicitly indicate that the serving cell is changed to another cell.

In a case to which this option is applied, when a NW (base station) changes no serving cell, it is necessary that, when the MAC CE activates PDSCH TCI states associated with a cell having a different PCI, a TCI state associated with another cell (for example, a current serving cell or a cell having a second different PCI) be also included in the activation.

### {{Option 1-3}}

In a case where the MAC CE activates/deactivates unified TCI states (corresponding to a unified TCI framework of Rel. 17, for example) and where all the activated unified TCI states are associated with same cell x having a different PCI, the UE may judge to change the serving cell to another cell (cell x). In other words, this association may implicitly indicate that the serving cell is changed to another cell.

### {Aspect 2}

In Aspect 2, explicit signaling for serving cell change indication will be described. Scenario 2 described above is applied to Aspect 2, for example.

### {{Option 2-1}}

An example of the serving cell change indication will be described below. Note that activation/deactivation of a non-serving cell, change of a serving cell, and transmission/reception to/from another cell (non-serving cell) having a physical cell ID different from a physical cell ID of the serving cell may be interchangeably interpreted.

The UE may receive a new MAC CE used for activation/deactivation of a non-serving cell and including at least one of fields (information) indicating (1) to (3) below corresponding to a non-serving cell. The UE may, when receiving the MAC CE, judge to change the serving cell to another cell (non-serving cell). The UE may control, based on the information, DL/UL signal transmission/reception to/from the non-serving cell. Note that the non-serving cell may be one or a plurality of non-serving cells. In the example described below, a MAC CE including a plurality of fields indicating a plurality of non-serving cell indices is applied.
(1) Serving cell ID
(2) BWP ID
(3) Non-serving cell ID used for activation The non-serving cell ID may be replaced with any information (with which the non-serving cell can be identified) corresponding to the non-serving cell.

As an example of (3), any one of (3-1) to (3-5) may be applied, for example.
(3-1) PCI (PCI to be directly used) For example, 10 bits are used.
(3-2) Re-indexing index (new ID) of non-serving cell The new ID may be associated with part of the PCI, and may be configured only for a serving cell and a non-serving cell used by (available to) the UE. The new ID can reduce the number of bits more than the PCI does.
(3-3) CSI report configuration ID (CSI-ReportConfigId) (when CSI-ReportConfig corresponds to one or a plurality of non-serving cells)
(3-4) CSI resource configuration ID (CSI-ResourceConfigId) (when CSI-ResourceConfigId corresponds to one or a plurality of non-serving cells)
(3-5) Bitmap indicating activation/deactivation of each non-serving cell A size (the number of bits) of the bitmap may be the same as the number of non-serving cells configured in this CC.
For example, when the second non-serving cell of three non-serving cells is activated, "010" is configured.

At least one piece of the information included in the MAC CE may be included in DCI. Alternatively, at least one of serving cells activated by the MAC CE may be indicated by the DCI. The MAC CE / DCI may include a field for indicating a TCI state / SSB / CSI-RS from a cell having a different PCI, so that the UE can recognize, in a target cell (serving cell after change), a DL beam to be monitored. By using the TCI state / SSB / CSI-RS, the UE may create a beam report (CSI report) and transmit the created report.

### {{Option 2-2}}

The UE may receive a MAC CE obtained by adding a new 1-bit field "C" to an existing MAC CE. The field indicates whether change of a serving cell is performed. The UE may receive the MAC CE, and may judge, based on the field, whether to change the serving cell to another cell.

### {{Option 2-3}}

For the MAC CE in Option 2-2, the MAC CE may further include a field indicating a serving cell index / PCI / another ID (the above-described new ID in Option 2-1 or the like), or a field for a TCI state / SSB / CSI-RS for a target cell (serving cell after change).

Thus, indication for serving cell change indication is indicated by a MAC CE / DCI, thereby allowing the UE to appropriately change a serving cell.

### {Example 1 of Serving Cell Switching}

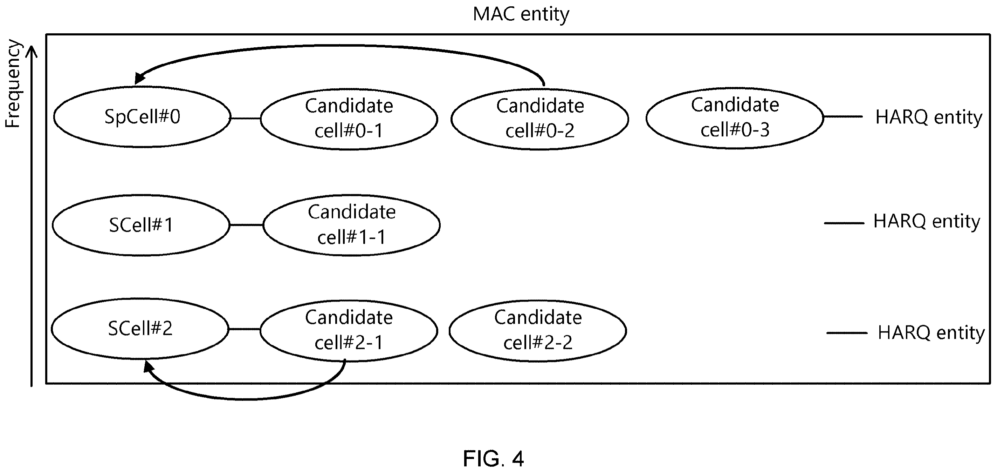

FIG. 4 is a diagram to show Example 1 of the serving cell switching. For example, when L1/L2 signaling indicates, in a serving cell "SpCell #0" in an MCG/SCG, that the serving cell is changed to candidate cell #0-2, candidate cell #0-2 becomes a new serving cell "SpCell #0." For example, when L1/L2 signaling indicates, in a serving cell "SCell #2" in an MCG/SCG, that the serving cell is changed to candidate cell #2-1, candidate cell #2-1 becomes a new serving cell "SCell #2."

### {Example 2 of Serving Cell Switching}

RRC / MAC CE can configure a global candidate cell ID (cell #0, ..., 5) for each cell group, band, FR, or UE. The global candidate cell ID may indicate, for the UE, serving cell switching.

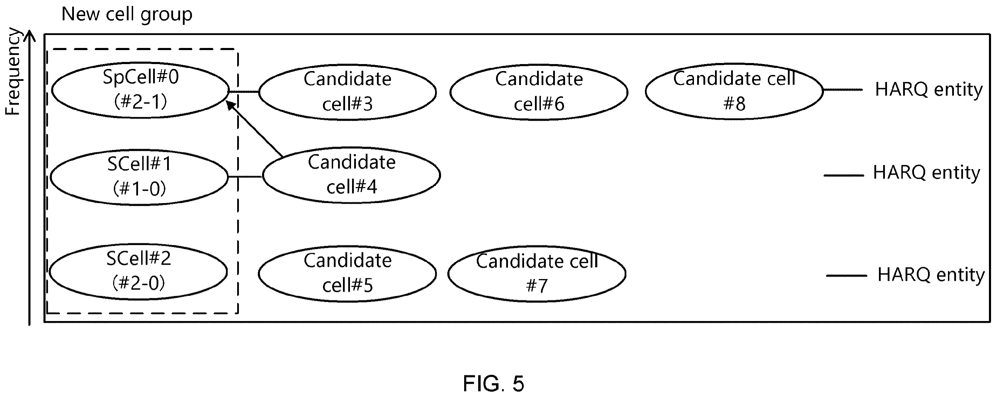

FIG. 5 is a diagram to show Example 2 of the serving cell switching. As in FIG. 3A, a pool of a plurality of candidate cells can be configured, and L1/L2 signaling can switch a serving cell to any (activated) candidate cell in the pool. In this case, the configured candidate cell can become either an SpCell or a Sell, based on the L1/L2 signaling.

The UE may receive an indication of serving cell change (from cell #2-1 to candidate cell 4) via a MAC CE / DCI. Indicated candidate cell #4 becomes an SpCell in a new cell group.

### {Example 3 of Serving Cell Switching}

RRC / MAC CE can configure a global candidate cell ID (cell #0-1, #0-1, ..., 2-2) for each cell group, band, FR, or UE. The global candidate cell ID may indicate, for the UE, serving cell switching.

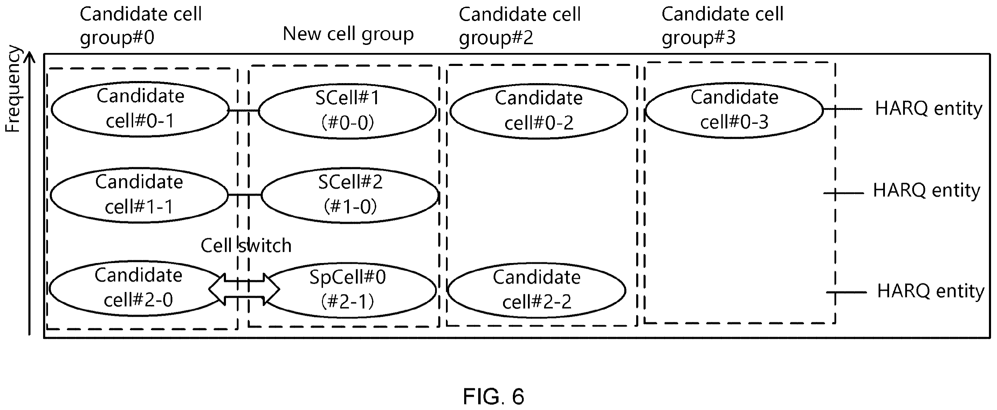

FIG. 6 is a diagram to show Example 3 of the serving cell switching. The UE receives an indication of serving cell change (from cell #2-0 to cell #2-1) via a MAC CE / DCI. Indicated cell #2-1 becomes an SpCell in a new cell group. Cells (cell #0-0, cell #1-0) in the same cell group as that for indicated cell #2-1 become Scell #1 and Scell #2. In other words, a serving cell group is switched.

### (CSI Report Configuration)

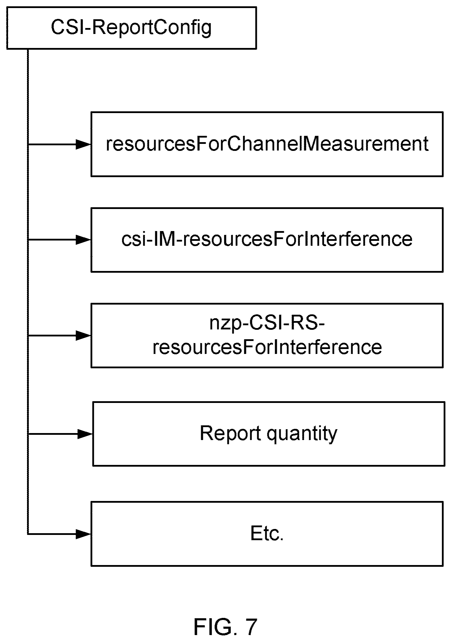

FIG. 7 is a diagram to show an outline of a CSI report configuration of RRC. FIG. 7 shows a CSI report configuration of RRC for 3GPP Rel. 17. As shown in FIG. 7, the CSI report configuration (CSI-ReportConfig) includes a channel measurement resource setting (resourcesForChannelMeasurement), interference measurement CSI-IM resource information (csi-IM-resourcesForInterference), interference measurement NZP-CSI-RS resource information (nzp-CSI-RS-resourcesForInterference), a report quantity, and the like. "resourcesForChannelMeasurement," "csi-IM-resourcesForInterference," and "nzp-CSI-RS-resourcesForInterference" correspond to CSI resource configuration "CSI-ResourceConfig."

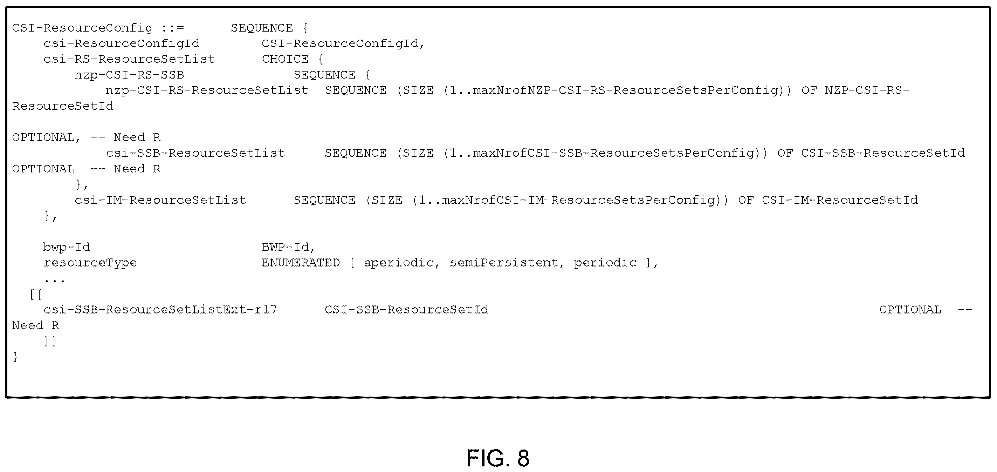

FIG. 8 is a diagram to show part of a CSI resource configuration for Rel. 17. As shown in FIG. 8, the CSI resource configuration (CSI-ResourceConfig) includes "csi-SSB-ResourceSetList." "csi-SSB-ResourceSetList" is a reference list of SSB resources used for CSI measurement or reporting, from among a CSI-RS resource set. "csi-SSB-ResourceSetListExt-r17" is used to add an element to "csi-SSB-ResourceSetList" when the number of reported groups (nrofReportedGroups-r17) is configured in CSI report configuration.

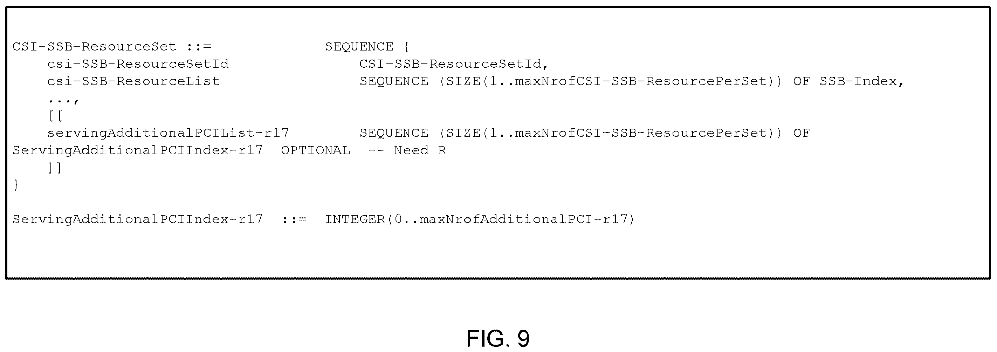

FIG. 9 is a diagram to show part of a CSI-SSB resource set for Rel. 17. As shown in FIG. 9, the CSI-SSB-resource set (CSI-SSB-ResourceSet) includes "servingAdditionalPCIList-r17."

"servingAdditionalPCIList-r17" indicates a physical cell ID (PCI) of an SSB included in csi-SSB-ResourceList. When this parameter is present, this list has the same number of entries as that of csi-SSB-ResourceList. The first entry and the second entry in this list indicate a value of the PCI for the first entry in csi-SSB-ResourceList and a value of the PCI for the second entry in csi-SSB-ResourceList, respectively. The same applies to the subsequent entries. When each entry corresponds to a value of zero, the PCI is a PCI of a serving cell for which this CSI-SSB-ResourceSet is defined. Otherwise (when a value of each entry is a non-zero value), a value of each entry is additionalPCIIndex-r17 of SSB-MTC-AdditionalPCI-r17 in additionalPCIList-r17 of serving cell configuration (ServingCellConfig), and the PCI is additionalPCI-r17 of this SSB-MTC-AdditionalPCI-r17.

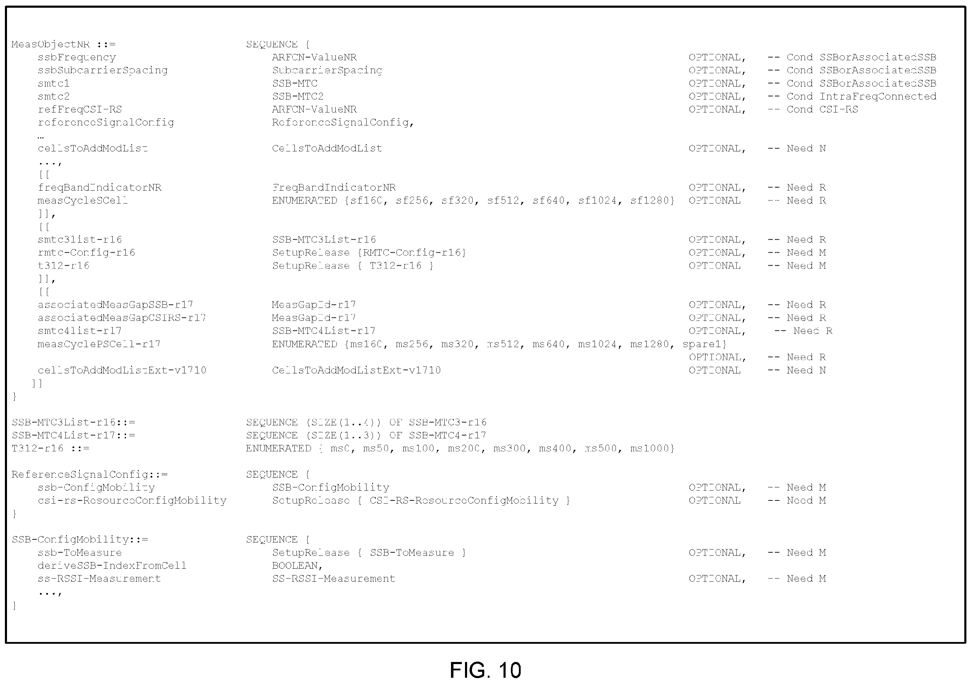

FIG. 10 is a diagram to show configuration related to L3 measurement/reporting for Rel. 17. associatedMeasGapSSB-r17 indicates a relevant measurement gap for SSB measurement specified by ssb-ConfigMobility for a measurement object. When a plurality of pieces of MeasObjectNR with the same SSB frequency are configured, a network configures, for each piece of MeasObjectNR, the same measurement gap ID in this field. When this field is absent, the relevant measurement gap is a gap configured via gapFR1, gapFR2, or gapUE.

associatedMeasGapCSIRS-r17 indicates a relevant measurement gap for CSI-RS measurement specified by csi-rs-ResourceConfigMobility for a measurement object. When this field is absent, the relevant measurement gap is a gap configured via gapFR1, gapFR2, or gapUE.

### <Enhancement of L1 Measurement/Reporting for L1/L2 Inter-cell Mobility>

When RSs (SSBs primarily) for a serving cell and a non-serving cell are configured in the same CSI report configuration (or in the same CSI resource configuration), the UE may add and report, in addition to conventional report content, some indicators indicating serving/non-serving cells.

When a new RRC parameters is configured, the UE may report an L3-RSRP value (for each beam/cell/multi-beam) in addition to an SSB index / CRI and an L1-RSRP/L1-SINR value.

### <Event Trigger L1 Beam Reporting for L1/L2 Inter-cell Mobility>

One or a plurality of existing events for RRM of TS38.331 may be reused to trigger aperiodic L1 beam reporting. To trigger the aperiodic L1 beam reporting, one or a plurality of new/separate events may be defined. L1 beam reporting may be performed with any combination of two or more events as a trigger. The event may be any one of events A2 to A6 and I1 below. In each of events A2 to A6, a measurement result may be a measurement result of at least one of an RSRP (L1-RSRP/L3-RSRP), an RSRQ, and an SINR (RS-SINR) .

Event A2: A measurement result in a serving cell is worse than a threshold.

Event A3: A measurement result in a neighboring cell (value obtained by adding an offset to the measurement result) is better than a measurement result in an SpCell (value obtained by adding an offset to the measurement result).

Event A4: A measurement result in a neighboring cell (value obtained by adding an offset to the measurement result) is better than a threshold.

Event A5: A measurement result in an SpCell is worse than a first threshold, and a measurement result in a neighboring cell (value obtained by adding an offset to the measurement result) is better than a second threshold.

Event A6: A measurement result in a neighboring cell (value obtained by adding an offset to the measurement result) is better than a measurement result in a serving cell (Secondary Cell (SCell)) (value obtained by adding an offset to the measurement result).

Event I1: An interference measurement result is higher than a threshold.

### (Enhancement of CSI Report)

### <Analysis>

It is preferable to support L1 beam measurement at a plurality of frequencies (inter-frequency measurement) to support, in inter-cell mobility, switching of an SpCell/SCell to a candidate cell at any frequency. Meanwhile, L1 beam measurement/reporting based on existing CSI report configuration supports only configuration of an RS for the same frequency as that for a serving cell.

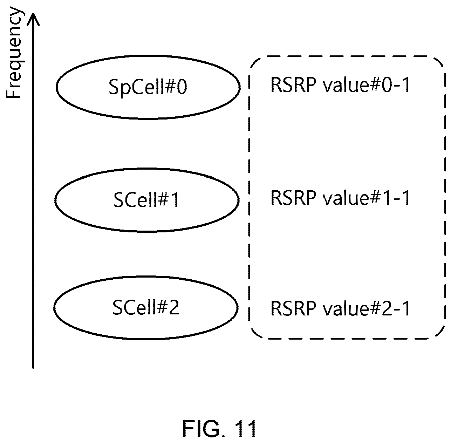

FIG. 11 is a diagram to show an example of RSRP values at the plurality of frequencies. FIG. 11 shows that different RSRP values (RSRP values #0-1, 1-1, 2-1) are measured for cells at different frequencies (SpCell #0, SCell #1, SCell #2). How configuration related to L1 beam measurement/reporting is performed and how the measurement/reporting is performed, in such a case, will be described.

### <Enhancement (1) of CSI Measurement/Report Configuration>

Enhancement of CSI measurement/report configuration for support of frequency configuration for L1 beam measurement (CSI measurement) using a reference signal (RS) (SSB/CSI-RS) will be described. For example, the UE may receive at least one of a channel state information (CSI) report configuration and a CSI resource configuration indicating one or a plurality of frequencies, and may control CSI measurement and CSI reporting using a reference signal (RS) at the one or plurality of frequencies.

### [Option 1]

At least one of a CSI report configuration (CSI-ReportConfig) and a CSI resource configuration (CSI-ResourceConfig) may include a frequency configuration (for example, an absolute radio-frequency channel number (Absolute radio-frequency channel number (ARFCN)-ValueNR) corresponding to a reference signal for measurement (for example, an SSB/CSI-RS). ARFCN-ValueNR is used to indicate an ARFCN to be applied to a downlink, uplink, or bidirectional (TDD) NR global frequency raster. Each CSI report configuration / CSI resource configuration corresponds to one frequency. A plurality of CSI report configurations are necessary for support of L1 beam measurement/reporting at a plurality of frequencies. A case where ARFCN-ValueNR is absent in the CSI report configuration may indicate the same frequency as that of a current serving cell configuration.

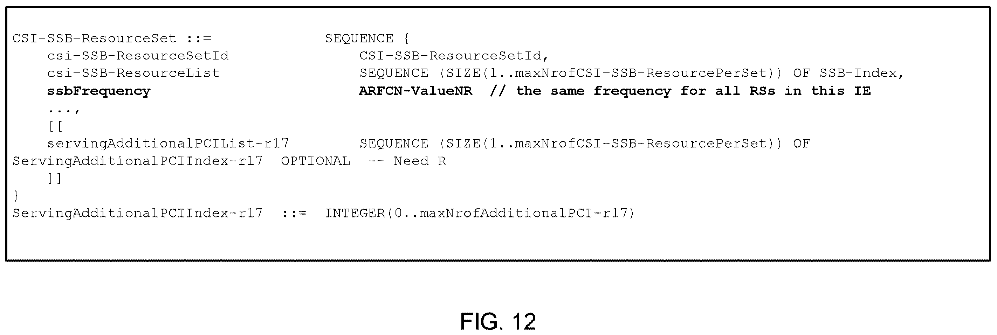

FIG. 12 is a diagram to show an example of CSI-SSB-ResourceSet in Option 1 for the enhancement of the L1 measurement/report configuration. CSI-SSB-ResourceSet is included in the CSI report configuration or the CSI resource configuration. In FIG. 12, CSI-SSB-ResourceSet includes an SSB frequency configuration (ssbFrequency) corresponding to ARFCN-ValueNR.

### [Option 2]

At least one of the CSI report configuration and the CSI resource configuration may support configuration of a different frequency (for example, ARFCN-ValueNR) for each SSB/CSI-RS/PCI. Each CSI resource configuration / CSI report configuration may support L1 beam measurement/reporting at a plurality of frequencies. In this case, RSRP comparison is comparison over frequencies, and thus a beam report quantity configuration and a beam selection rule also need to be enhanced. The comparison over frequencies is normally performed based on SINR/RSRQ. The SINR/RSRQ will be described below.

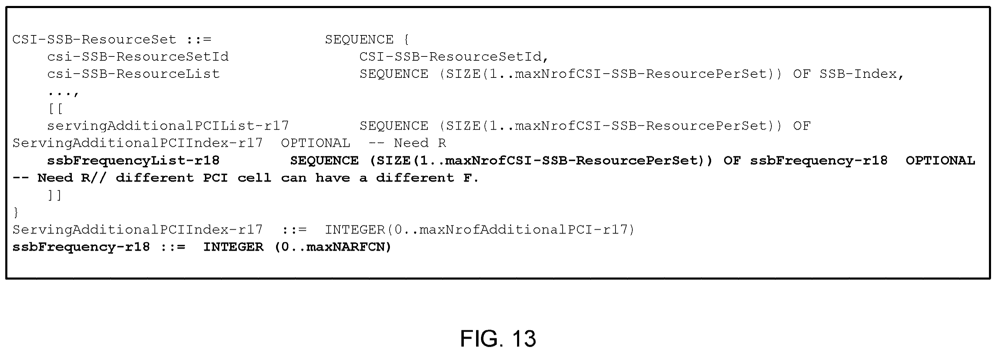

FIG. 13 is a diagram to show an example of CSI-SSB-ResourceSet in Option 2 for the enhancement of the L1 measurement/report configuration. CSI-SSB-ResourceSet is included in the CSI report configuration or the CSI resource configuration. In FIG. 13, CSI-SSB-ResourceSet includes an SSB frequency list (ssbFrequencyList-r18) and an SSB frequency configuration (ssbFrequency).

A frequency to be used for the beam measurement/reporting may be configured/indicated by a MAC CE / DCI. For example, RRC (CSI report configuration / CSI resource configuration) may configure a list of a plurality of frequencies, and the MAC CE / DCI may configure/indicate one or a plurality of frequencies from among the frequencies in the list. The plurality of frequencies may be frequencies for a serving cell and a candidate cell.

Such enhancement of L1 measurement/report configuration as that described above allows one or a plurality of frequencies used for beam measurement/reporting to be configured appropriately.

### <Enhancement (2) of CSI Measurement/Report Configuration>

Next, a case where the CSI resource configuration / CSI report configuration supports L1 beam (CSI) measurement/reporting at a plurality of frequencies will be described. The UE receives, in the CSI resource configuration / CSI report configuration, a configuration/indication indicating an RS (SSB/CSI-RS) to be received at the plurality of frequencies, and uses the RS to perform CSI (L1-RSRP/L1-SINR) measurement or reporting.

The UE may control (may transmit) transmission of one CSI report including both a Layer 1 Reference Signal Received Power (L1-RSRP) and a Layer 1 Signal to Interference plus Noise Ratio (L1-SINR). The UE may control (may transmit) transmission of one CSI report including CSI (L1-RSRP/L1-SINR) measurement results at the plurality of frequencies.

The UE may be configured with a report quantity for both of the L1-RSRP and the L1-SINR to thereby report both of the L1-RSRP and the L1-SINR for a beam index. A beam with the largest L1-RSRP and L1-SINR may be arranged at the head of the CSI report, or may be specified. Differential quantization may be performed for each of an L1-RSRP value and an L1-SINR value. To select a beam for the report, the UE can perform comparison between L1-RSRPs at respective frequencies.

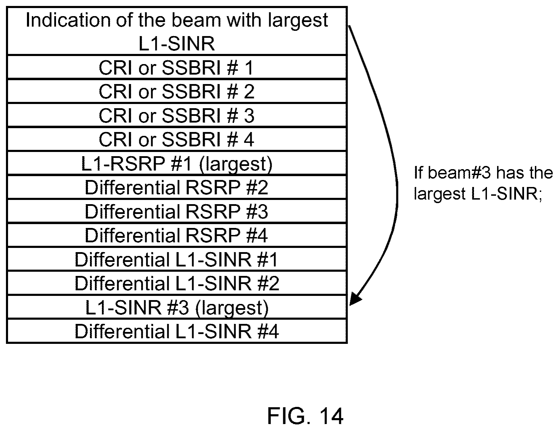

FIG. 14 is a diagram to show an example of the CSI report at the plurality of frequencies. In the example of FIG. 14, the CSI report includes an absolute value of the largest L1-RSRP (L1-RSRP #1) and values of differences from the absolute value (Differential RSRPs #2, #3, #4). The CSI report includes an absolute value of the largest L1-SINR (L1-SINR #3) and values of differences from the absolute value (Differential RSRPs #1, #2, #4). The CSI report includes, at the head (first line) thereof, a beam indication with the largest L1-SINR. In this example, beam #3 is indicated as a beam with the largest L1-SINR.

When measuring an RS at the plurality of frequencies to select a beam to report, the UE may first perform comparison between L1-RSRPs at the same frequency, and then may perform comparison between L1-SINRs over different frequencies. Alternatively, the UE may first perform comparison between L1-SINRs over different frequencies, and then may perform comparison between L1-RSRPs at the same frequency.

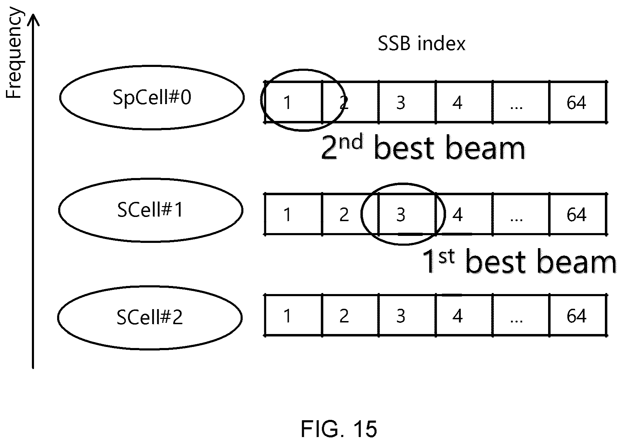

FIG. 15 is a diagram to show an example of a method for the CSI measurement/reporting at the plurality of frequencies. In the example of FIG. 15, CSI reporting is performed for cells with different frequencies (SpCell #0, SCell #1, SCell #2). In this example, 64 beams (SSBs) per cell are present, and thus the UE measures L1-RSRPs and L1-SINRs of 64×3 beams. In this example, assume that an L1-RSRP of SSB #3 of SCell #1 is highest and that an L1-RSRP of SSB #1 of SpCell #0 is second highest. The UE reports an absolute value of the L1-RSRP of SSB #3 of Scell #1 and a differential value of the L1-RSRP of SSB #1 of SpCell #0.

Regarding the RS/Cell configured in the CSI report configuration, for the SpCell, all the candidate cells for serving cell switching may be configured in CSI report configuration for L1 measurement, for example. A NW (base station) may judge whether to perform cell switching, based on L1 measurement and a reported result.

The CSI report may include information indicating a frequency or a PCI for which an RS with an L1-RSRP/L1-SINR to be measured has been transmitted.

Thus, one CSI report can report both an L1-RSRP and an L1-SINR. Also, one CSI report can report CSI measurement results (L1-RSRPs/L1-SINRs) at a plurality of frequencies. Conventionally, interference differs depending on a frequency (CC), and thus an L1-SINR has different values. Employing the above example allows the UE to report L1-SINRs at different frequencies, and thus the NW can recognize an L1-SINR for a candidate cell to be switched, for example.

When CSI measurement/reporting at a plurality of frequencies is used to configure inter-cell CSI measurement/reporting, a frequency, a PCI, a specific RS with a PCI, a UE, and STMC and MG configuration for CSI resource configuration may be added to the CSI report configuration.

### <L3 Measurement/Reporting>

The UE may receive configuration information for Layer 3 (L3) measurement/reporting, the configuration information including a configuration for beam (CSI) measurement/reporting with a Layer 1 (L1) reference signal (SSB/CSI-RS). The UE may control, based on the configuration information, L1 and L3 measurement/reporting. For example, as shown in FIG. 10, MeasObjectNR as the configuration information related to L3 measurement/reporting may include a frequency configuration for RRM measurement (for example, ARFCN-ValueNR).

### [Option 1]

Configuration information (MeasObjectNR) related to L3 measurement/reporting may include an indication indicating whether the configuration information is for conventional L3 RRM measurement or L1 beam measurement. When L1 beam measurement is indicated, the configuration information may further include some configuration (for example, a report quantity) for L1 measurement/reporting in CSI report configuration.

### [Option 2]

Configuration information (MeasObjectNR) related to one L3 measurement/report may include, for L1 beam measurement/reporting, a plurality of frequencies and a PCI/RS configuration corresponding to different frequencies. An L1 measurement result and an L3 measurement result may be configured to be reported in separate CSI reports or one CSI report.

### {CSI Report}

The UE may report, in L1 beam reporting (CSI reporting) over frequencies (at a plurality of frequencies), an L3 measurement result (L3-RSRP value for each beam/cell/multi-beam). Alternatively, the UE may report, in reporting of an L3 measurement result, an L1 measurement result. The UE may report, in an RRC IE or a MAC CE, an L1 measurement result.

L1 measurement/reporting over frequencies (at a plurality of frequencies) may be configured as an event trigger. For example, when a specific event has occurred, the UE may perform L1 measurement/reporting over frequencies (at a plurality of frequencies).

As a variation, the UE may receive configuration information (CSI report configuration / CSI resource configuration) for beam measurement/reporting with an SSB/CSI-RS for L1, the configuration information including a configuration for Layer 3 (L3) measurement/reporting.

Thus, configurations for Layer 1 and Layer 3 can be performed jointly, thereby allowing signaling overhead to be suppressed. When the present embodiment is used for configuration of inter-cell L1 measurement/reporting, STMC and MG configurations for L3 measurement of MeasObjectNR can be reused for L1 measurement.

### (L1 Beam Measurement/Reporting with Support of Inter-frequency Cell Switching)

When such inter-frequency cell switching as that shown in the example of FIG. 5 is supported, it is preferable to perform CSI measurement/reporting over different frequencies, based on one piece of configuration information. Otherwise, a gNB is required to independently configure L1 beam measurements/reports at respective frequencies to acquire beam qualities from cells at different frequencies. Furthermore, there is a possibility that only reporting of only an L1-RSRP or only an L1-SINR is insufficient to compare beam qualities at different frequencies with each other. In other words, there is a possibility that both an L1-RSRP and an L1-SINR are required. CSI measurement/reporting over different frequencies is appropriately performed, thereby allowing configuration/reporting overhead for acquiring an optimum beam/cell at different frequencies to be reduced.

The CSI reporting at the plurality of frequencies has been described in FIG. 14 and the like, but an example of CSI measurement/reporting (measurement/reporting of an L1-RSRP/L1-SINR) at a plurality of frequencies will be described below more specifically.

### <Measurement/Reporting (1) of L1-RSRP/L1-SINR>

An example of CSI resource configuration (CSI-ResourceConfig) / CSI report configuration (CSI-ReportConfig) in a case where L1 beam measurement/reporting (for example, L1 beam measurement/reporting) in cells at one or a plurality of frequencies is supported will be described.

L1 beam measurement at a plurality of frequencies (inter-frequency measurement) may be supported to support, in inter-cell mobility, switching of an SpCell/SCell to a candidate cell (or additional cell, target cell) at any frequency. L1 beam measurement/reporting (or CSI measurement/reporting) for a plurality of frequencies (or frequency domains) may include at least one of Layer 1 Reference Signal Received Power (L1-RSRP) and Layer 1 Signal to Interference plus Noise Ratio (L1-SINR).

The UE may receive information related to CSI resource configuration / CSI report configuration for one or more candidate cells corresponding to different frequencies, and may perform, based on the information, CSI reporting / beam reporting including at least one of an L1-RSRP and an L1-SINR in each candidate cell.

For example, the UE may perform CSI reporting including one of an L1-RSRP or an L1-SINR or both an L1-RSRP and an L1-SINR, for a given cell (for example, a candidate cell) and a given frequency (for example, a frequency corresponding to a candidate cell) (see FIG. 14). FIG. 14 shows an example of a case where both of the L1-RSRP and the L1-SINR are included in a given CSI report (for example, CSI report #n).

A beam selection rule (or rule of selection of CSI to be reported) may be defined beforehand in a specification, or may be configured by RRC signaling. Beam selection (or selection of CSI to be reported) may be performed based on both an L1-RSRP and an L1-SINR.

The UE may perform beam selection (or selection of CSI to be reported), based on a given higher layer parameter. The given higher layer parameter may be, for example, a report quantity (for example, reportQuantity) included in a CSI report configuration (for example, CSI-ReportConfig). On the other hand, when the given higher layer parameter configures any one of an L1-RSRP and an L1-SINR, the UE may perform control so as to include the one configured value in the CSI report and so as not to include the other value in the CSI report.

For example, the UE may determine the beam selection (or CSI to be reported), based on at least one of Option 1-1 to Option 1-3 below.

### {Option 1-1}

A given higher layer parameter (for example, reportQuantity) may support configuration of both an L1-RSRP and an L1-SINR so that both of the L1-RSRP and the L1-SINR can be reported for a beam index (or CSI index).

For example, when the given higher layer parameter configures both an L1-RSRP and an L1-SINR, the UE reports CSI including the L1-RSRP and the L1-SINR.

Alternatively, even in a case where both an L1-RSRP and an L1-SINR are configured, a report quantity of the CSI may be reduced when a given condition is satisfied (alternatively, the given CSI report may not be performed). Overhead for the CSI report may be reduced based on at least one of Option 1-1A or Option 1-1B below.

### <<Option 1-1A>>

The UE may judge report content (or measurement result to be included in the CSI), based on at least one of an L1-RSRP measurement result and an L1-SINR measurement result. For example, the UE may judge, based on at least one of a measurement result of an L1-RSRP and a measurement result of an L1-SINR, whether to report both of the L1-RSRP and the L1-SINR (or report one of them). When reporting only one of an L1-RSRP and an L1-SINR, the UE may judge, based on a measurement result of the L1-RSRP and a measurement result of the L1-SINR, which measurement result is to be reported.

Alternatively, the UE may always include one measurement result (for example, an L1-RSRP) in the CSI, and may judge whether to report the other measurement result (for example, an L1-SINR), based on at least one of an L1-RSRP measurement result and an L1-SINR measurement result.

The UE may indicate a measurement result to report. For example, when reporting only one of an L1-RSRP and an L1-SINR, the UE may indicate which measurement result is reported. For example, a given field included in the CSI may be used to indicate a measurement result to be reported.

### <<Option 1-1B>>

The UE may report both an L1-RSRP and an L1-SINR for a specific beam/cell, and may report only one of an L1-RSRP and an L1-SINR for another beam/cell (or remaining beam/cell). In the present disclosure, the specific beam/cell may be the best beam/cell, a beam/cell with the highest quality, a beam/cell with the highest L1-RSRS, or a beam/cell with the highest L1-SINR. The beam may be a reference signal resource index (for example, a CRI/SSBRI).

In Option 1-1A/Option 1-1B, when both / only one of an L1-RSRP and an L1-SINR is selected (or reported), the UE may autonomously determine report content, or the report content may be determined based on a given rule. The given rule may be, for example, a rule in which a measurement result exceeding a threshold configured/defined for an L1-RSRP and a threshold configured/defined for an L1-SINR is reported. The L1-RSRP threshold / L1-SINR threshold may be configured separately by higher layer signaling.

Thus, even when reporting of both an L1-RSRP and an L1-SINR is configured/defined, reporting of only one of these values is allowed/supported based on a given condition, thereby allowing an increase in overhead for CSI reporting to be suppressed.

### {Option 1-2}

A given higher layer parameter (for example, reportQuantity) / DCI may support configuration/indication of only one of an L1-RSRP and an L1-SINR. The UE performs control so as to report a configured/indicated measurement result (one of the L1-RSRP and the L1-SINR).

### {Option 1-3}

A given higher layer parameter (for example, reportQuantity) / DCI may support configuration/indication of only one of an L1-RSRP and an L1-SINR. The UE may report both an L1-RSRP and an L1-SINR for a specific beam/cell, and may report, for another beam/cell (or remaining beam/cell), a measurement result configured/indicated by the higher layer parameter / DCI (only one of an L1-RSRP and an L1-SINR).

The specific cell may be autonomously determined by the UE, or may be configured by a higher layer parameter. Alternatively, when a measurement result of CSI reporting (L1-RSRP or L1-SINR) not configured by a higher layer exceeds a predefined/preconfigured threshold, the non-configured CSI reporting may be performed.

Thus, even when reporting of only one of an L1-RSRP and an L1-SINR is configured/defined, reporting of both an L1-RSRP and an L1-SINR is allowed/supported for a specific cell, thereby allowing detailed CSI reporting to be performed for a specific beam/cell.

### {UE Capability}

When CSI resource configuration (CSI-ResourceConfig) / CSI report configuration (CSI-ReportConfig) supports L1 beam (or CSI) measurement/reporting in cells at a plurality of frequencies, a UE capability related to the number of configured/reported cells (or the number of beams, the number of pieces of CSI) may be introduced. For example, a UE capability related to the number of cells (or the number of beams, the number of pieces of CSI) configured/reported for each CSI resource configuration / CSI report configuration / frequency may be supported. Alternatively, a UE capability related to the number of cells (or the number of beams, the number of pieces of CSI) configured/reported over CSI resource configurations / CSI report configurations / frequencies may be supported.

### <Measurement/Reporting (2) of L1-RSRP/L1-SINR>

Another example of the CSI resource configuration (CSI-ResourceConfig) / CSI report configuration (CSI-ReportConfig) in the case where L1 beam measurement/reporting (for example, L1 beam measurement/reporting) in cells at one or a plurality of frequencies is supported will be described. The following examples may be applied in combination with Measurement/Reporting (1) of L1-RSRP/L1-SINR.

When CSI resource configuration (CSI-ResourceConfig) / CSI report configuration (CSI-ReportConfig) supports L1 beam measurement/reporting in a cell at a given frequency, the CSI resource configuration / CSI report configuration may include information related to the frequency (for example, a frequency configuration). The L1 beam measurement/reporting may be interpreted as CSI measurement/reporting.

The frequency configuration may be a frequency configuration (for example, an absolute radio-frequency channel number (Absolute radio-frequency channel number (ARFCN)-ValueNR) corresponding to a reference signal for measurement (for example, an SSB/CSI-RS). ARFCN-ValueNR is used to indicate an ARFCN to be applied to a downlink, uplink, or bidirectional (TDD) NR global frequency raster. Each CSI report configuration / CSI resource configuration corresponds to one frequency. A plurality of CSI report configurations are necessary for support of L1 beam measurement/reporting at a plurality of frequencies. A case where ARFCN-ValueNR is absent in the CSI report configuration may indicate the same frequency as that of a current serving cell configuration.

The UE may be configured with a frequency configuration indicating a frequency at which CSI measurement/reporting is performed, and a report quantity (for example, reportQuantity) indicating content of the CSI measurement/reporting (for example, L1-RSRP, L1-SINR). The configuration described in the first embodiment may be applied to configuration/reporting of the report quantity.

For example, one CSI report configuration (or each CSI report configuration) may include a frequency configuration and a report quantity (for example, reportQuantity). A configuration in which measurement/reporting of both an L1-RSRP and an L1-SINR is configured for a given cell (or frequency) and in which measurement/reporting of only one of an L1-RSRP and an L1-SINR is configured for another cell (or frequency) may be supported. The UE controls, based on the frequency configuration and the report quantity (for example, reportQuantity), CSI measurement / CSI reporting.

For example, the UE may determine the beam selection (or CSI to be reported), based on at least one of Option 2-1 to Option 2-3 below.

### {Option 2-1}

A given higher layer parameter (for example, reportQuantity) may support configuration of both an L1-RSRP and an L1-SINR so that both of the L1-RSRP and the L1-SINR can be reported for a beam index (or CSI index) of a given cell (or given frequency).

For example, when a given higher layer parameter (for example, a frequency configuration) and a report quantity (for example, reportQuantity) configure both an L1-RSRP and an L1-SINR for a given cell or frequency, the UE reports CSI including the L1-RSRP and the L1-SINR corresponding to the frequency.

Alternatively, a report quantity of the CSI may be reduced when a given condition is satisfied (alternatively, the given CSI report may not be performed). Overhead for the CSI report may be reduced based on at least one of Option 2-1A and Option 2-1B below.

### <<Option 2-1A>>

The UE may judge report content (or measurement result to be included in the CSI), based on at least one of an L1-RSRP measurement result and an L1-SINR measurement result. For example, the UE may judge, based on at least one of a measurement result of an L1-RSRP and a measurement result of an L1-SINR, whether to report both of the L1-RSRP and the L1-SINR. When reporting only one of an L1-RSRP and an L1-SINR, the UE may judge, based on a measurement result of the L1-RSRP and a measurement result of the L1-SINR, which measurement result is to be reported.

Alternatively, the UE may always include one measurement result (for example, an L1-RSRP) in the CSI, and may judge whether to report the other measurement result (for example, an L1-SINR), based on at least one of an L1-RSRP measurement result and an L1-SINR measurement result.

The UE may indicate a measurement result to report. For example, when reporting only one of an L1-RSRP and an L1-SINR, the UE may indicate which measurement result is reported. For example, a given field included in the CSI may be used to indicate a measurement result to be reported.

### <<Option 2-1B>>

The UE may report both an L1-RSRP and an L1-SINR for a specific beam/cell, and may report only one of an L1-RSRP and an L1-SINR for another beam/cell (or remaining beam/cell). In the present disclosure, the specific beam/cell may be the best beam/cell, a beam/cell with the highest quality, a beam/cell with the highest L1-RSRS, or a beam/cell with the highest L1-SINR.

In Option 2-1A/Option 2-1B, when both / only one of an L1-RSRP and an L1-SINR is selected (or reported), the UE may autonomously determine report content, or the report content may be determined based on a given rule. The given rule may be, for example, a rule in which a measurement result exceeding a threshold configured/defined for an L1-RSRP and a threshold configured/defined for an L1-SINR is reported. The L1-RSRP threshold / L1-SINR threshold may be configured separately by higher layer signaling.

Thus, even when reporting of both an L1-RSRP and an L1-SINR is configured/defined, reporting of only one of these values is allowed/supported based on a given condition, thereby allowing an increase in overhead for CSI reporting to be suppressed.

### {Option 2-2}

A given higher layer parameter (for example, a frequency configuration) and a report quantity (for example, reportQuantity) / DCI may support configuration/indication of only one of an L1-RSRP and an L1-SINR for a given cell or frequency. The UE performs control so as to report a configured/indicated measurement result (one of the L1-RSRP and the L1-SINR).

### {Option 2-3}

A given higher layer parameter (for example, a frequency configuration) and a report quantity (for example, reportQuantity) / DCI may support configuration/indication of only one of an L1-RSRP and an L1-SINR for a given cell or frequency. The UE may report both an L1-RSRP and an L1-SINR for a specific beam/cell/frequency, and may report, for another beam/cell/frequency (or remaining beam/cell/frequency), a measurement result configured/indicated by the higher layer parameter / DCI (only one of an L1-RSRP and an L1-SINR).

The specific cell may be autonomously determined by the UE, or may be configured by a higher layer parameter. Alternatively, when a measurement result of CSI reporting (L1-RSRP or L1-SINR) not configured by a higher layer exceeds a predefined/preconfigured threshold, the non-configured CSI reporting may be performed.

Thus, even when reporting of only one of an L1-RSRP and an L1-SINR is configured/defined, reporting of both an L1-RSRP and an L1-SINR is allowed/supported for a specific cell, thereby allowing detailed CSI reporting to be performed for a specific beam/cell.

### (Analysis)

As described above, in a case where multi-TRP are applied, there is a possibility that signaling of at least one of layer 1 and layer 2 switches a serving cell to a cell with a PCI different from that of the serving cell (additional cell / candidate cell) (L1/L2 inter-cell mobility (layer1/layer2 inter-cell mobility)).

Meanwhile, in a case where frequencies of respective PCIs are different from each other, how configuration related to CSI measurement or reporting at/in respective frequencies/cells (for example, measurement or reporting of an L1-RSRP or an L1-SINR) is performed and how the measurement or reporting is performed are indefinite. Unless the CSI measurement or reporting at/in the plurality of frequencies/cells is performed appropriately, problems, such as communication throughput reduction, may be caused.

For example, details of comparison, selection, quantization, and the like of an RS in a case where RSs corresponding to a serving cell, a plurality of candidate cells, and a plurality of frequencies are configured remain unclear.

In view of this, the inventors of the present invention came up with the idea of a terminal, a radio communication method, and a base station that enable CSI measurement and reporting at/in a plurality of frequencies/cells to be performed appropriately.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, another message (message from a core network, such as a positioning protocol (for example, NR Positioning Protocol A (NRPPa) / LTE Positioning Protocol (LPP)) message, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, a cell group, a serving cell group, a master cell group (MCG), and a secondary cell group (SCG) may be interchangeably interpreted. L1/L2, L1/L2 signaling, and DCI / MAC CE may be interchangeably interpreted. A serving cell may be replaced with a cell for transmitting a PDSCH. A candidate cell may mean a candidate cell to be a serving cell in accordance with L1/L2 inter-cell mobility.

In the present disclosure, a cell, a PCI, a serving cell, a source serving cell, a source cell, a CC, a BWP, a BWP in a CC, and a band may be interchangeably interpreted. In the present disclosure, a cell, a PCI, a cell with an additional PCI, an additional cell, another cell, a non-serving cell, a cell having a different PCI, a candidate cell, a candidate serving cell, a cell having a PCI different from a PCI of a current serving cell, another serving cell, and a target cell may be interchangeably interpreted. In the present disclosure, switching, change, and update may be interchangeably interpreted. A serving cell may be interpreted as a serving cell before switching or a serving cell after switching.

In the present disclosure, beam measurement/reporting, L1 beam measurement/reporting, L1 measurement/reporting, and CSI measurement/reporting may be interchangeably interpreted. L1 may indicate at least one of an L1-RSRP and an L1-SINR. An RS may be at least one of a CSI-RS and an SSB. An L1-RSRP and an L1-SINR may be interchangeably interpreted. An RS, a beam, an SSB, an SSB index, an SSBRI (SS/PBCH Block Resource Indicator), a CSI-RS index, and a CRI (CSI-RS Resource Indicator) may be interchangeably interpreted.

In the present disclosure, an event and a condition may be interchangeably interpreted. In the present disclosure, a cell and a frequency may be interchangeably interpreted.

### (Radio Communication Method)

A UE measures at least one of a Layer 1 (L1)-Reference Signal Received Power (RSRP) and an L1-Signal to Interference plus Noise Ratio (SINR) of a reference signal (RS) over one or more frequencies or one or more cells, or for each frequency/cell. The UE transmits a channel state information (CSI) report including at least one of an L1-RSRP and an L1-SINR. These processes will be described below in detail in each of the respective embodiments.

### <Zero-th Embodiment>

It is conceivable that, for CSI reporting in inter-cell mobility triggered by L1/L2 of Rel. 18, cases below are supported and configured. In each case, a quantity for measurement and beam comparison/selection (quantity of an L1-RSRP/L1-SINR) and a quantity for CSI reporting may be specified by a specification, or may be separately or commonly configured by a NW (base station) via higher layer signaling / physical layer signaling. In each of the following examples, a "beam" may be interpreted as at least one of an RS, a cell, and a frequency.

### {Case 1}

A UE measures and selects a beam, based on an L1-RSRP, and reports an L1-RSRP of the selected beam.

### {Case 2}

The UE measures and selects a beam, based on an L1-SINR, and reports an L1-SINR of the selected beam.

### {Case 3}

The UE measures and selects a beam, based on both an L1-RSRP and an L1-SINR, and reports only an L1-RSRP of the selected beam.

### {Case 4}

The UE measures and selects a beam, based on both an L1-RSRP and an L1-SINR, and reports only an L1-SINR of the selected beam.

### {Case 5}

The UE measures and selects a beam, based on both an L1-RSRP and an L1-SINR, and reports both an L1-RSRP and an L1-SINR of the selected beam.

### {Case 6}

The UE adds a result of filtering in a time/beam domain or an L3 result to any one or both an L1-RSRP and an L1-SINR and reports the resultant value, based on a configuration from the base station.

For the number of configured reference signals (RSs), the UE may transmit, as UE capability information, at least one of Options a to e below. A range of configuration in each of Options a to e may be for at least one of each CSI report configuration, each plurality of CSI report configurations, each slot, and each UE.
{Option a} Maximum number of RSs configured over all cells and all frequencies
{Option b} Maximum number of RSs configured for each cell / candidate cell
{Option c} Maximum number of configured RSs per frequency
{Option d} Maximum number of configured frequencies
{Option e} Maximum number of cells / candidate cells configured for each frequency / each plurality of frequencies

### <First Embodiment>

For the number of RSs reported by a UE, based on a CSI report configuration, a NW (base station) may configure (transmit) at least one of Options below for (to) the UE, via higher layer signaling / physical layer signaling, based on a corresponding UE capability report and restriction on a specification. The UE may generate and transmit a CSI report, based on the configuration.
{Option 1} Number of RSs over all cells and all frequencies
{Option 2} Number of RSs for each cell / candidate cell
{Option 3} Number of RSs per frequency
{Option 4} Number of selected/reported frequencies
{Option 5} Number of selected/reported candidate cells per frequency
{Option 6} Number of selected/reported candidate cells for each plurality of frequencies

The UE may transmit (report), to the base station, information obtained by replacing the "number" in each option above with a "maximum number," as UE capability information.

### <Second Embodiment>

CSI (L1 beam) reporting and quantization will be described by using, as an example thereof, Case 1 described above. The same also applies to the example of the present embodiment in a case of Case 2. In other words, RSRP in the present embodiment may be replaced with SINR. A re-indexing RS index in the present disclosure may correspond to a candidate cell (additional cell, additionalPCI), and may be associated with at least one of configured RS indices (SSB indices / CSI-RS indices / CSI-SSB-resource set IDs). In the present disclosure, a UE may receive a re-indexing RS index, or may perform re-indexing, based on a configured RS index.

### [Option 1]

The UE receives a re-indexing RS index, and compares/selects/reports an L1-RSRP per the RS index over a plurality of frequencies/cells. The first L1-RSRP in the CSI report is the largest L1-RSRP, and is quantized by 7 bits. A remaining L1-RSRP is quantized as a value of a difference from the largest L1-RSRP, by 4 bits.

A beam selected for the reporting may follow the restriction of any one of the options of the first embodiment. For example, when two RSs are configured in Option 2, the UE transmits a CSI report related to two beams (two RSs) for each cell / candidate cell. For example, when three RSs are configured for each frequency in Option 3, the UE may transmit a CSI report related to three beams (three RSs) for each frequency.

As described in examples of FIGS. 12 and 13, respective RSs configured for CSI reporting are associated with cell indices and frequencies. Accordingly, when indices of all the configured RSs are changed (all the configured RSs are re-indexed), indices of the re-indexed RSs implicitly indicate cell indices and frequencies, and thus the UE is not required to report explicit cell indices and frequencies.

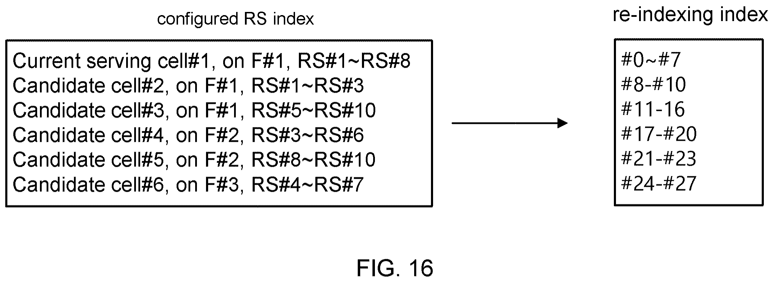

FIG. 16 is a diagram to show a first example of the re-indexing indices. In FIG. 16, F #X indicates a frequency index (cell index). In other words, an RS index (RS #X) is associated with and configured for each frequency (configured RS index). The UE transmits (reports), for each RS index, a re-indexing index. In the example of FIG. 16, re-indexing is performed based on priorities of cell indices and configured RS indices. In other words, indices are created in increasing order of corresponding cell indices, and indices are created for the same cell index in increasing order of configured RS indices.

Alternatively, the UE may indicate/report, in a new UCI field, one or more cell indices / frequency indices. In this case, the UE may not transmit/report all the re-indexing RS indices for all the cell/frequency indices. For example, the new UCI field may indicate the order of frequency indices / cell indices (for example, {F #1, F #2, F #3} and {CC #1, CC #2, CC #3, CC #4, CC #5, CC #6}). This allows a base station to identify an RS index even when a re-indexing RS index is not transmitted.

Alternatively, the re-indexing may be performed in units of a frequency/cell. For example, when four RSs are configured for Cell #1, 2 bits may be used for a report for Cell #1.

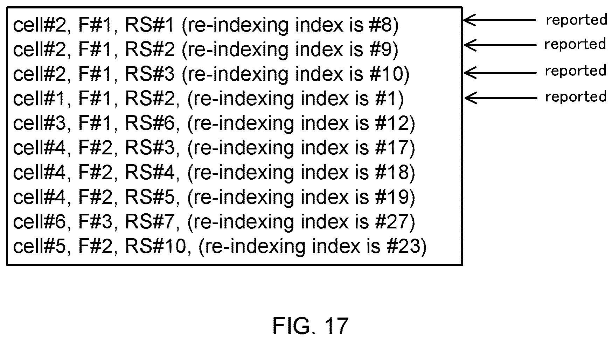

FIGS. 17 to 19 are diagrams to show concrete examples of a CSI report including the re-indexing indices. In each of FIGS. 17 to 19, measured values, such as L1-RSRPs, are omitted, but corresponding re-indexing RS indices are arranged in decreasing order of L1-RSRPs.

### <<Example Report 1-1>>

For example, when reporting corresponding to 4 RSs (beams) over cells/frequencies is configured, the UE transmits a CSI report for 4 RSs (re-indexing index is #8, #9, #10, #1) with larger L1-RSRPs in FIG. 17.

### <<Example Report 1-2>>

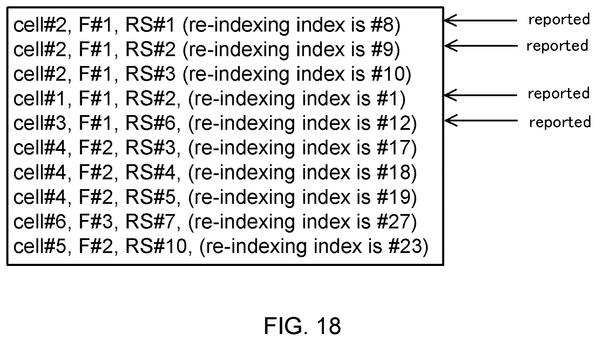

For example, when reporting corresponding to a total of 4RSs and up to 2 RSs per cell is configured, the UE transmits a CSI report for 4 RSs (re-indexing index is #8, #9, #1, #12) (FIG. 18). In other words, Example Report 1-2 differs from Example Report 1-1 in that, due to the presence of the configuration of up to 2 RSs per cell, a CSI report for re-indexing index=#12 is transmitted instead of a CSI report for re-indexing index=#10.

### <<Example Report 1-3>>

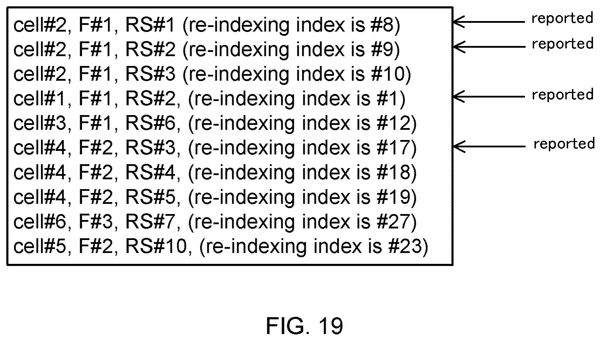

For example, when reporting corresponding to a total of 4RSs, up to 2 RSs per cell, and up to 3 RSs per frequency is configured, the UE transmits a CSI report for 4 RSs (re-indexing index is #8, #9, #1, #17) (FIG. 19). In other words, Example Report 1-3 differs from Example Report 1-2 in that, due to the presence of the configuration of up to 3 RSs per frequency, a CSI report for re-indexing index=#17 is transmitted instead of a CSI report for re-indexing index=#12.

According to Option 1, CSI reporting is performed by comparing/selecting an RS over a plurality of cells / plurality of frequencies, thereby allowing an optimum cell/frequency to be identified in/at a plurality of cells / plurality of frequencies.

### [Option 2]

The UE compares/selects, for each frequency, an L1-RSRP with an RS index, and transmits, for each frequency, a CSI report including up to N L1-RSRPs and corresponding RS indices.

The first L1-RSRP in the CSI report may be the largest L1-RSRP over all the frequencies, and may be quantized by 7 bits. A remaining L1-RSRP may be quantized as a value of a difference from the largest L1-RSRP, by 4 bits. Alternatively, the strongest (first) L1-RSRP at each frequency may be quantized by 7 bits, and a remaining L1-RSRP may be quantized as a differential value, by 4 bits.

Re-indexing of RSs may be performed over a plurality of frequencies, in a manner similar to that of Option 1. Alternatively, the re-indexing of RSs may be configured for each frequency. When the re-indexing is performed for each frequency, the order of RSs (beams) to be reported may be, for example, the order of frequency indices (for example, ordering an RS with F #1 first, then an RS with F #1, and then F #1). Alternatively, the UE may explicitly report a frequency index corresponding to an RS per frequency.

In Option 2, the UE may receive a configuration of the number of RSs to be reported for each frequency. This allows the UE to recognize that beams to be reported over a plurality of frequencies are present.

### <<Example Report 2-1>>

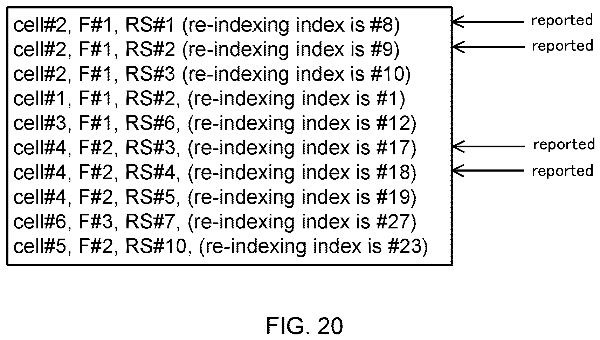

When reporting corresponding to up to 4 RSs and corresponding to 2 RSs per frequency is configured, the UE transmits a CSI report for 4 RSs (re-indexing index is #8, #9, #17, #18) (FIG. 20). Each of the RSs with #8, #17 corresponds to a largest value of an L1-RSRP per frequency (F #1, F #2), and is quantized by 7 bits. Each of the RSs with #9, #18 corresponds to a differential value of an L1-RSRP per frequency (F #1, F #2), and is quantized by 4 bits. Note that the order in the CSI report is not limited to the example of FIG. 20, and an RS with the largest value of the L1-RSRP may be arranged first, and an RS with the differential value of the L1-RSRP may be arranged next, for example. In other words, #8, #17, #9, and #18 may be arranged in this order.

### <<Example Report 2-2>>

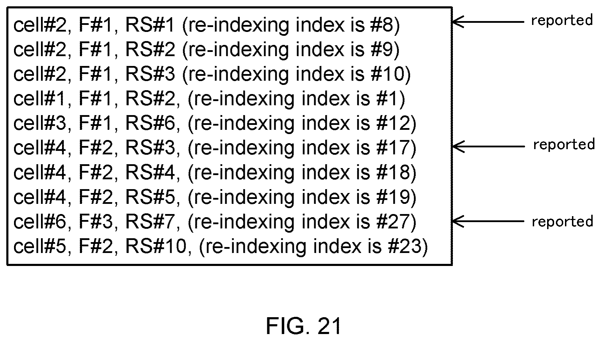

When reporting corresponding to 1 RS per frequency is configured, the UE transmits a CSI report for 3 RSs (re-indexing index is #8, #17, #27) (FIG. 21). In other words, only an RS corresponding to a largest value of an L1-RSRP per frequency (F #1, F #2, F #3) is reported. The largest value of each L1-RSRP is quantized by 7 bits.

Note that, in each of the examples of FIGS. 17 to 21, the order of arrangement of RSs and re-indexing indices in CSI reporting is not limited to the order described in the diagram.

According to Option 2, CSI reporting is performed by comparing/selecting an RS for each frequency, thereby allowing an optimum RS/beam to be identified at specific frequencies.

According to the present embodiment, a re-indexing index is applied for each CSI report, thereby allowing the number of bits of a reported RS index to be reduced.

### <Third Embodiment>

A case where a UE measures RSs for both L1-RSRPs and L1-SINRs to select an RS to report, and transmits a CSI report including only an L1-RSRP or only an L1-SINR of the selected RS (Case 3 or Case 4 described above) will be described in detail. Measurement/Reporting (1) or (2) of L1-RSRP/L1-SINR described above may be applied to the present embodiment.

### {Aspect 3-1}

The UE measures both L1-RSRPs and L1-SINRs to perform comparison between RSs at each frequency or comparison between RSs over a plurality of frequencies. In this case, Option 1 or Option 2 below may be applied, for example.

### <<Option 1>>

(1) The UE may receive a configuration of an L1-RSRP/L1-SINR threshold, and may select only beams (RSs) with measurement results higher than the threshold to further perform comparison. For example, the UE may first select RSs with L1-SINRs higher than the threshold, and may then rank beams with L1-SINRs higher than the threshold, in relation to their respective L1-RSRPs, to report X RSs in decreasing order of L1-RSRPs.
(2) The UE may first judge whether L1-RSRPs are higher than the threshold, and may then rank beams with L1-RSRPs higher than the threshold, in relation to their respective L1-SINRs, to report X RSs in decreasing order of L1-SINRs. X is the number of configured RSs, and follows the configuration of any one of Options 1 to 6 of the first embodiment, for example.
(3) The UE selects beams (RSs) with L1-RSRPs higher than the threshold and with L1-SINRs higher than the threshold. The UE may perform, by using L1-RSRPs or L1-SINRs, two-step selection of beams to be reported. The UE may first rank the selected RSs in relation to ones of these values (L1-RSRPs or L1-SINRs), for each frequency or over a plurality of frequencies (first step), and may then rank a given number of RSs with higher ranks in the ranking, in relation to the others of these values (L1-SINRs or L1-RSRPs), for each frequency or over a plurality of frequencies (second step), to report X RSs with the respective higher ranks. Note that the number of RSs to be selected by using L1-RSRPs or L1-SINRs may be configured by higher layer signaling, may be defined in a specification, or may be reported as UE capability information. The RSs in the CSI report may be reported in decreasing order of measured values (L1-RSRPs or L1-SINRs) in any one of the first step and the second step.

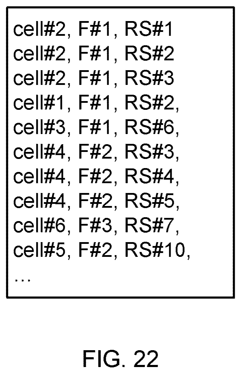

FIG. 22 is a diagram to show an example of the CSI report using Option 1 of Aspect 3-1. For example, FIG. 22 shows an example in which the ranking over a plurality of frequencies is applied in Option 1. When the first and second comparisons are L1-RSRPs and L1-SINRs, respectively, the final order in the CSI report is based on strengths of L1-SINRs. In this case, there is a possibility that an RS corresponding to the strongest L1-RSRP is not arranged at the head of the CSI report. Alternatively, when the first and second comparisons are L1-SINRs and L1-RSRPs, respectively, the final order in the CSI report is based on strengths of L1-RSRPs. In this case, there is a possibility that an RS corresponding to the strongest L1-SINR is not arranged at the head of the CSI report.

### <<Option 2>>

The UE may first select a given number of (for example, three) RSs with higher L1-RSRPs (or L1-SINRs) from RSs at each frequency, and may then rank the selected RSs in relation to their L1-SINRs (or L1-RSRPs). For example, in the first comparison, the UE compares L1-RSRPs of RSs per frequency with each other, and selects three beams for each frequency. The UE then compares L1-SINRs of the selected RSs with each other for each frequency or over a plurality of frequencies to rank the selected RSs.

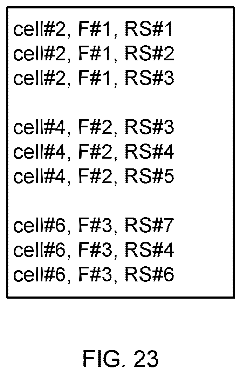

FIG. 23 is a diagram to show an example of the CSI report using Option 2 of Aspect 3-1. The example of FIG. 23 shows an example in which the CSI report is performed for 3 RSs for each frequency. The UE first selects a given number of (for example, three) RSs with higher L1-RSRPs from RSs at each frequency, then ranks the selected RSs in relation to their L1-SINRs, and determines, based on the ranking related to the L1-SINRs, the order of arrangement in the CSI report. Alternatively, the UE first selects a given number of (for example, three) RSs with higher L1-SINRs from RSs at each frequency, then ranks the selected RSs in relation to their L1-RSRPs, and determines, based on the ranking related to the L1-RSRPs, the order of arrangement in the CSI report.

### {Aspect 3-2}

CSI (L1 beam) reporting and quantization will be described. The following example corresponds to an example of Case 3 described above, but Case 4 may be applied to the following example. When Case 4 is applied, L1-RSRP is replaced with L1-SINR.

### <<Option 1>>

In the CSI report, the UE reports, over a plurality of frequencies/cells, RS indices and L1-RSRPs for respective RS indices. The RS indices may be the re-indexing indices in the second embodiment. The first L1-RSRP in the CSI report is the largest L1-RSRP over a plurality of frequencies/cells, and is quantized by 7 bits. A remaining L1-RSRP is quantized as a value of a difference from the largest L1-RSRP, by 4 bits. When performing the two-step comparison as described in Aspect 3-1, the UE may report X RSs in decreasing order of L1-RSRPs by using L1-SINRs and L1-RSRPs for the first comparison and the second comparison, respectively. The comparison between L1-RSRPs/L1-SINRs may be performed for each frequency/cell or over a plurality of frequencies/cells. Option 1 allows the best RS (beam) to be identified over a plurality of frequencies/cells.

### <<Option 2>>

In the CSI report, the UE reports, for each frequency/cell, RS indices and L1-RSRPs for respective RS indices. The first L1-RSRP in the CSI report is the largest L1-RSRP at/in each frequency/cell, and is quantized by 7 bits. A remaining L1-RSRP is quantized as a value of a difference from the largest L1-RSRP at/in each frequency/cell, by 4 bits. Option 2 allows the best RS (beam) to be identified for each frequency/cell.

In the present embodiment, the re-indexing of RSs may be performed for each frequency/cell, or may be performed over a plurality of frequencies/cells. In this option, the number of beams to be reported for each frequency may be configured.

According to the present embodiment, a value other than the largest L1-RSRP/L1-SINR is quantized by 4 bits, thereby allowing the number of bits to be reduced.

### <Fourth Embodiment>

A case where a UE measures RSs for both L1-RSRPs and L1-SINRs to select an RS to report, and reports both an L1-RSRP and an L1-SINR of the selected RS (Case 5 described above) will be described in detail. Measurement/Reporting (1) or (2) of L1-RSRP/L1-SINR described above may be applied to the present embodiment.

### {Aspect 4-1}

In this case, Options 1 and 2 for RS (beam) comparison of the present embodiment are the same as Options 1 and 2 of the third embodiment, and thus description of these options will be omitted. In the present disclosure, a frequency may be interpreted as a cell.

### <<Option 3>>

First, RSs may be compared with each other, based on L1-RSRPs, for each frequency or over a plurality of frequencies, and then RSs may be compared with each other, based on L1-SINRs, for each frequency or over a plurality of frequencies. Based on respective results of the comparisons, the UE may, in one CSI report, report a given number of RSs in decreasing order of L1-RSRPs and further report a given number of RSs in decreasing order of L1-SINRs.

### {Aspect 4-2}

### <<Option 1>>

In a manner similar to that of the example (for example, FIGS. 14 and 15) described in Enhancement (2) of CSI Measurement/Report Configuration described above, CSI reporting may be performed. Note, however, that, in place of the CRIs or SSBRIs, re-indexing RS indices over a plurality of frequencies may be included in a CSI report. In other words, the UE may report re-indexing RS indices, and L1-RSRPs and L1-SINRs for respective RS indices. The first L1-RSRP in the CSI report is the largest L1-RSRP, and is quantized by 7 bits. A remaining L1-RSRP is quantized as a value of a difference from the largest L1-RSRP, by 4 bits. An additional indication indicating a beam with the highest L1-SINR is reported, the indicated highest L1-SINR is quantized by 7 bits, and a remaining L1-SINR is quantized as a differential value, by 4 bits.

The UE may report X RSs in decreasing order of L1-RSRPs by using L1-SINRs and L1-RSRPs for the first comparison and the second comparison, respectively. The comparison between L1-RSRPs/L1-SINRs may be performed for each frequency or over a plurality of frequencies.

### <<Option 2>>

The UE may report re-indexing RS indices, and L1-RSRPs and L1-SINRs for respective RS indices. The first L1-SINR in the CSI report is the largest L1-SINR, and is quantized by 7 bits. A remaining L1-SINR is quantized as a value of a difference from the largest L1-SINR, by 4 bits. Furthermore, an additional indication indicating a beam with the highest L1-RSRP is reported, the indicated highest L1-RSRP is quantized by 7 bits, and a remaining L1-RSRP is quantized as a differential value, by 4 bits.

The UE may report X RSs in decreasing order of L1-SINRs by using L1-RSRPs and L1-SINRs for the first comparison and the second comparison, respectively. The comparison between L1-RSRPs/L1-SINRs may be performed for each frequency or over a plurality of frequencies.

### <<Option 3>>

In the CSI report, the UE may report RS indices, and L1-RSRPs and L1-SINRs for respective RS indices. In this option, the UE compares/selects/reports, for each frequency, an L1-RSRP and an L1-SINR of an RS.

Quantization in the CSI report may be the same as Option 1, for example.

Alternatively, at each frequency, the largest/first L1-RSRP may be quantized by 7 bits, and a remaining L1-RSRP may be quantized as a differential value, by 4 bits. At each frequency, an indication for an RS with the largest L1-SINR may be additionally reported for each frequency. Thus, the indicated largest L1-SINR is quantized by 7 bits, and a remaining L1-SINR is quantized as a differential value, by 4 bits. Alternatively, the UE may additionally report, at a plurality of frequencies, an indication of a beam with the largest L1-SINR. Thus, the indicated largest L1-SINR is quantized by 7 bits, and a remaining L1-SINR is quantized as a differential value, by 4 bits.

Alternatively, at each frequency, the largest/first L1-SINR is quantized by 7 bits, and a remaining L1-SINR is quantized as a differential value, by 4 bits. At each frequency, an indication of a beam with the largest L1-RSRP is additionally reported for each frequency. Thus, the indicated largest L1-RSRP is quantized by 7 bits, and a remaining L1-RSRP is quantized as a differential value, by 4 bits. Alternatively, the UE may additionally report, at a plurality of frequencies, an indication of the largest L1-RSRP. Thus, the indicated largest L1-RSRP is quantized by 7 bits, and a remaining L1-RSRP is quantized as a differential value, by 4 bits.

Re-indexing of RSs may be performed over a plurality of frequencies, in a manner similar to that of Option 1. Alternatively, the re-indexing of RSs may be performed for each frequency.

### <<Option 4>>

The UE may report a list including re-indexing RS indices and L1-RSRPs for respective RSs, and another list including re-indexing RS indices and L1-SINRs for respective RSs. For the respective lists for each frequency or over a plurality of frequencies, the UE may quantize, by 7 bits, the largest L1-RSRP/L1-SINR value, and may quantize, as a differential value, a value other than the value.

The present embodiment allows a CSI report to be created appropriately in a case of reporting of both an L1-RSRP and an L1-SINR.

### <Supplements>

Report content and quantization in a case where an L1-RSRP/L1-SINR is reported in CSI measurement/reporting based on judgment by a UE or on an event trigger remain unclear, and thus will be described in detail in a fifth/sixth embodiment.

### <Fifth Embodiment>

The zero-th to fourth embodiments are also applied to CSI measurement/reporting based on judgment by a UE or on an event trigger. The UE may transmit the CSI report of each of the zero-th to fourth embodiments by using, as a trigger, any one of events A2 to A6 and I1 described above. Alternatively, the UE may judge, by using another method, whether to perform CSI reporting. In other words, the UE may transmit a CSI report, based on judgment by the UE, even without receiving an indication from a NW (base station).

The UE may transmit a periodic CSI report on a PUCCH, may transmit a semi-persistent CSI report on a PUCCH/PUSCH, or may transmit an aperiodic CSI report on a PUSCH. Alternatively, the UE may transmit a CSI report on a MAC CE.

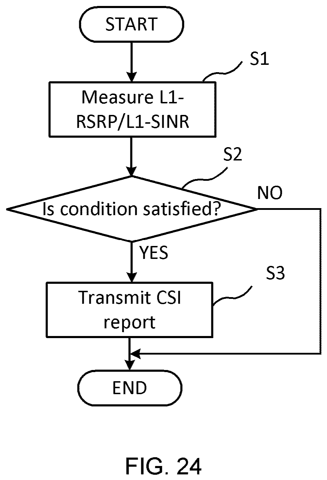

FIG. 24 is a flowchart to show an example of processing of the fifth/sixth embodiment. The UE measures an L1-RSRP/L1-SINR of an RS over one or more frequencies or one or more cells (S1). The UE judges whether a result of the measurement in S1 satisfies a specific condition (for example, satisfies at least one of events A2 to A6 and I1 described above) (S2). In a case of YES in S2, the UE transmits a CSI report including the L1-RSRP/L1-SINR (S3), and, in a case of NO in S2, the UE ends the processing related to the fifth/sixth embodiment. The processing of FIG. 24 may be repeated every given period.

### <Sixth Embodiment>

The UE may transmit a CSI report, based on any one of events A2 to A6 and I1 or another trigger, even without receiving an indication from a NW (base station). In this case, the CSI report may include content according to any one of options below. The following condition may be any one of events A2 to A6 and I1, or another condition. Note that, in each option, an RS (best RS) is selected in decreasing order of L1-RSRPs/L1-SINRs of RSs. A candidate cell (best candidate cell) is selected based on measurement results in events A2 to A6 and I1. The candidate cell corresponds to a neighboring cell in events A2 to A6 and I1. The present embodiment may be based on the fifth embodiment.

### {Aspect 6-1}

The UE may transmit a CSI report including one or more RSs corresponding to one or more candidate cells satisfying the condition, and corresponding L1-RSRP(s)/L1-SINR(s). Any one of Options 1 to 3 below may be applied, for example.

### <<Option 1>>

One best RS corresponding to one candidate cell satisfying the condition (with a cell ID / frequency ID, a re-indexing RS index / RS ID) and a corresponding L1-RSRP/SINR.

### <<Option 2>>

X RS(s) greater than or equal to one and corresponding to one best candidate cell satisfying the condition (with a cell ID / frequency ID, re-indexing RS index / RS ID) and a corresponding L1-RSRP/L1-SINR.

### <<Option 3>>

One or more (X) RSs corresponding to one or more (Y) candidate cells satisfying the condition (with a cell ID / frequency ID, re-indexing RS index / RS ID) and a corresponding L1-RSRP/L1-SINR.

When Options 1 to 3 are applied, the UE may not report a measured value for a serving cell. The UE may report only a measured value for a candidate cell satisfying the condition (for example, an offset being better than that for a serving cell, or a measured value for a candidate cell being higher than a threshold). X, Y, the number of RSs to be reported per cell, and the like may be configured by higher layer signaling / physical layer signaling. The UE may transmit, as UE capability information, X, Y, and the number of RSs to be reported per cell.

### <<Option 4>>

As the CSI report, in addition to the contents of Options 1, 2, and 3, RSs from a serving cell and L1-RSRPs/L1-SINRs of RSs are also additionally reported so that the NW determines mobility.

### {Aspect 6-2}

For quantization of measured values of L1-RSRPs/L1-SINRs included in the CSI report, at least one of Options 1 to 4 below may be applied. An example in which a specific measured value (absolute value) and a value of a difference from the specific measured value are quantized by 7 bits and 4 bits, respectively, will be described below, but these numbers of bits are not restrictive.

### <<Option 1>>

The UE may quantize, by 7 bits, each measured value of an RS irrespective of a candidate cell / serving cell.

### <<Option 2>>

The UE may quantize, by 7 bits, a measured value of an RS for a candidate cell, and may quantize, by 4 bits, a measured value of an RS for a current serving cell, as a differential value.

### <<Option 3>>

The UE may quantize, by 7 bits, a largest measured value of an RS for each candidate cell, and may quantize, by 4 bits, another measured value of an RS for each cell, as a differential value.

### <<Option 4>>

The UE may quantize, by 7 bits, a largest measured value of an RS for each frequency, and may quantize, by 4 bits, another measured value of an RS for each frequency, as a differential value.

The fifth/sixth embodiment allows a CSI report to be appropriately generated in a case of CSI measurement/reporting based on judgment by a UE or on an event trigger.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information for at least one of the embodiments above
- supporting of CSI reporting related to RSs for plurality of frequencies
- supporting of CSI reporting related to RSs for plurality of cells
- supporting of CSI reporting including both L1-RSRP and L1-SINR
- supporting of re-indexing
- supporting of CSI reporting for candidate cell

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1}

A terminal including:
a control section that measures at least one of a Layer 1 (L1)-Reference Signal Received Power (RSRP) and an L1-Signal to Interference plus Noise Ratio (SINR) of a reference signal (RS) over one or more frequencies or one or more cells; and
a transmitting section that transmits a channel state information (CSI) report including at least one of the L1-RSRP and the L1-SINR.

### {Supplementary Note 2}

The terminal according to supplementary note 1, further comprising a receiving section that receives a configuration of a number of RSs over all cells or all frequencies, a number of RSs per cell or candidate cell, or a number of RSs per frequency, wherein
the transmitting section transmits the CSI report based on the configuration.

### {Supplementary Note 3}

The terminal according to supplementary note 1 or 2, wherein
the control section creates an RS index corresponding to a candidate cell and associated with at least one of configured RS indices, and
the transmitting section transmits a channel state information (CSI) report including the created RS index.

### {Supplementary Note 4}

The terminal according to any one of supplementary notes 1 to 3, wherein
the control section measures the RS for the L1-RSRP and the L1-SINR, and selects an RS to report, and
the transmitting section transmits the CSI report including only the L1-RSRP or only the L1-SINR of the selected RS.

### (Supplementary Notes)

Regarding one embodiment of the present disclosure, the following supplementary notes of the invention will further be given.

### {Supplementary Note 1}

A terminal including:
a control section that measures at least one of a Layer 1 (L1)-Reference Signal Received Power (RSRP) and an L1-Signal to Interference plus Noise Ratio (SINR) of a reference signal (RS) over one or more frequencies or one or more cells and that judges whether a result of the measurement satisfies a specific condition; and
a transmitting section that, when the result of the measurement satisfies the specific condition, transmits a channel state information (CSI) report including at least one of the L1-RSRP and the L1-SINR.

### {Supplementary Note 2}

The terminal according to supplementary note 1, wherein
the transmitting section transmits a CSI report including one or more RSs corresponding to one or more candidate cells satisfying the specific condition, and at least one of corresponding L1-RSRP and L1-SINR.

### {Supplementary Note 3}

The terminal according to supplementary note 1 or 2, wherein
the control section quantizes, by 7 bits, a measured value of an RS for a candidate cell, and quantizes, by 4 bits, a measured value of an RS for a current serving cell, as a differential value.

### {Supplementary Note 4}

The terminal according to any one of supplementary notes 1 to 3, wherein
the control section quantizes, by 7 bits, a largest measured value of an RS for each frequency, and quantizes, by 4 bits, another measured value of an RS for each frequency, as a differential value.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

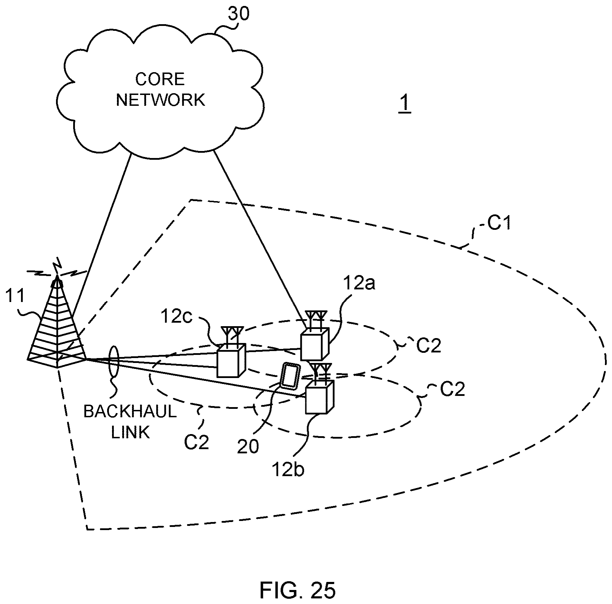

FIG. 25 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

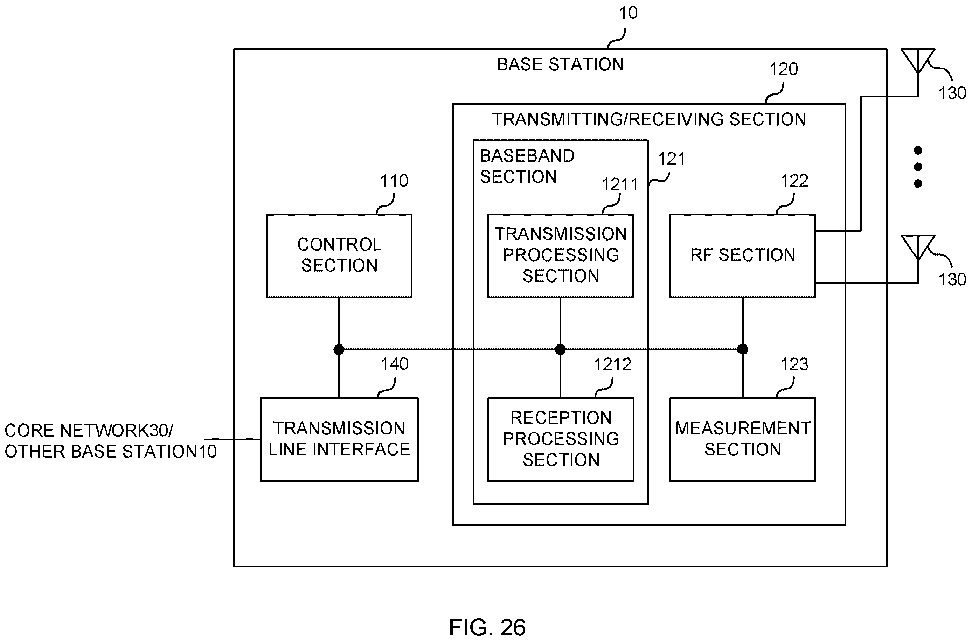

FIG. 26 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration related to measurement of at least one of a Layer 1 (L1)-Reference Signal Received Power (RSRP) and an L1-Signal to Interference plus Noise Ratio (SINR) of a reference signal (RS) over one or more frequencies or one or more cells, and may receive a channel state information (CSI) report including at least one of the L1-RSRP and the L1-SINR.

The transmitting/receiving section 120 may transmit a configuration related to measurement of at least one of a Layer 1 (L1)-Reference Signal Received Power (RSRP) and an L1-Signal to Interference plus Noise Ratio (SINR) of a reference signal (RS) over one or more frequencies or one or more cells, and may receive a channel state information (CSI) report including at least one of the L1-RSRP and the L1-SINR when a result of the measurement satisfies a specific condition.

The control section 110 may control transmission/reception processing in the transmitting/receiving section 120.

### (User Terminal)

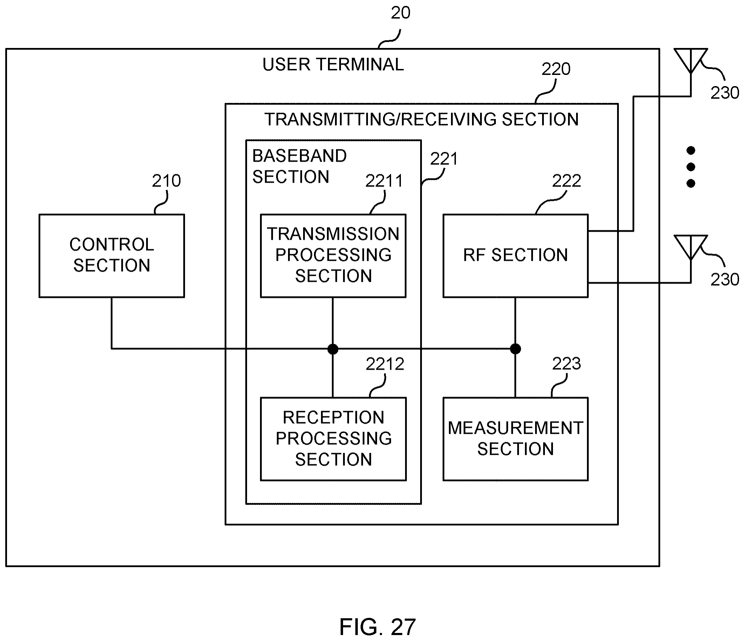

FIG. 27 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam or a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive, based on a channel measurement resource, channel measurement for CSI computation. The channel measurement resource may be, for example, a non-zero power (NZP) CSI-RS resource. The measurement section 223 may derive, based on an interference measurement resource, interference measurement for CSI computation. The interference measurement resource may be at least one of an NZP CSI-RS resource for interference measurement, a CSI-interference measurement (IM) resource, and the like. Note that CSI-IM may be referred to as CSI-interference management (IM), and may be interpreted as a zero power (ZP) CSI-RS, and vice versa. Note that, in the present disclosure, a CSI-RS, an NZP CSI-RS, a ZP CSI-RS, CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The control section 210 may measure at least one of a Layer 1 (L1)-Reference Signal Received Power (RSRP) and an L1-Signal to Interference plus Noise Ratio (SINR) of a reference signal (RS) over one or more frequencies or one or more cells.

The transmitting/receiving section 220 may transmit a channel state information (CSI) report including at least one of the L1-RSRP and the L1-SINR.

The transmitting/receiving section 220 may receive a configuration of a number of RSs over all cells or all frequencies, a number of RSs per cell or candidate cell, or a number of RSs per frequency, and may transmit the CSI report based on the configuration.

The control section 210 may create an RS index corresponding to a candidate cell and associated with at least one of configured RS indices. The transmitting/receiving section 220 may transmit a channel state information (CSI) report including the created RS index.

The control section 210 may measure the RS for the L1-RSRP and the L1-SINR, and may select an RS to report. The transmitting/receiving section 220 may transmit the CSI report including only the L1-RSRP or only the L1-SINR of the selected RS.

The control section 210 may measure at least one of a Layer 1 (L1)-Reference Signal Received Power (RSRP) and an L1-Signal to Interference plus Noise Ratio (SINR) of a reference signal (RS) over one or more frequencies or one or more cells, and may judge whether a result of the measurement satisfies a specific condition.

When the result of the measurement satisfies the specific condition, the transmitting/receiving section 220 may transmit a channel state information (CSI) report including at least one of the L1-RSRP and the L1-SINR.

The transmitting/receiving section 220 may transmit a CSI report including one or more RSs corresponding to one or more candidate cells satisfying the specific condition, and at least one of corresponding L1-RSRP and L1-SINR.

The control section 210 may quantize, by 7 bits, a measured value of an RS for a candidate cell, and may quantize, by 4 bits, a measured value of an RS for a current serving cell, as a differential value.

The control section 210 may quantize, by 7 bits, a largest measured value of an RS for each frequency, and may quantize, by 4 bits, another measured value of an RS for each frequency, as a differential value.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

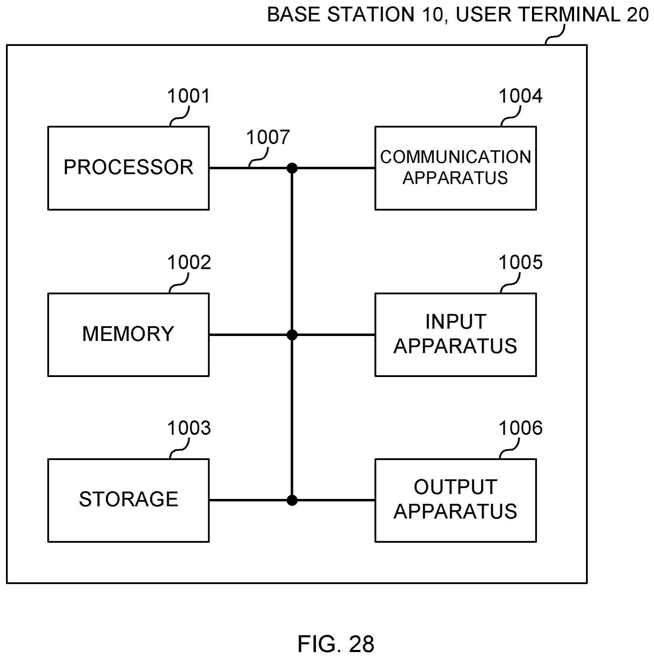

For example, a base station, a user terminal, and so on according to one embodiment of the present disclosure may function as a computer that executes the processes of the radio communication method of the present disclosure. FIG. 28 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

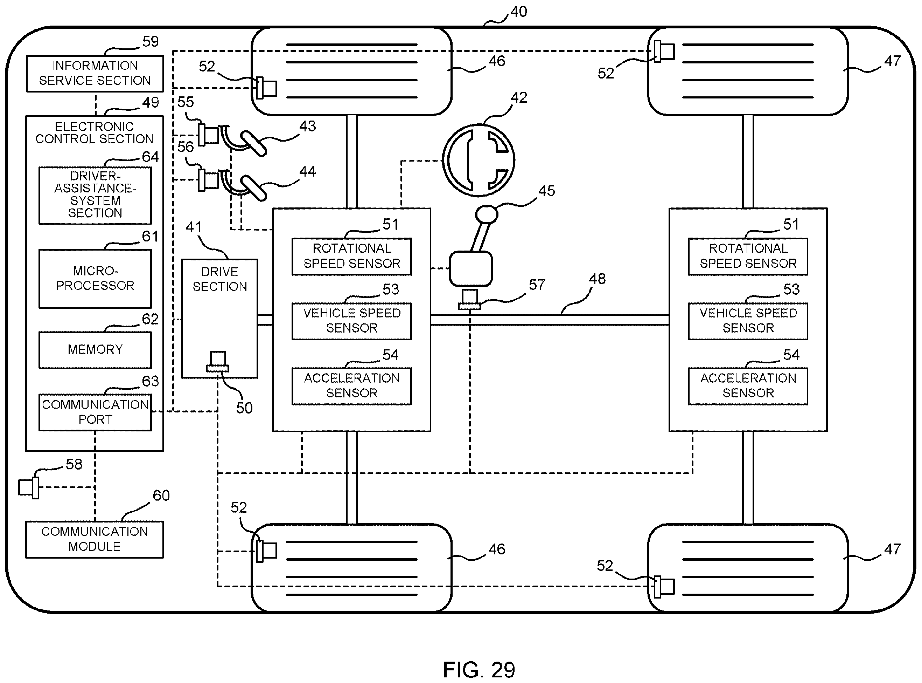

FIG. 29 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a control section that measures at least one of a Layer 1 (L1)-Reference Signal Received Power (RSRP) and an L1-Signal to Interference plus Noise Ratio (SINR) of a reference signal (RS) over one or more frequencies or one or more cells; and
a transmitting section that transmits a channel state information (CSI) report including at least one of the L1-RSRP and the L1-SINR.

2. The terminal according to claim 1, further comprising
a receiving section that receives a configuration of a number of RSs over all cells or all frequencies, a number of RSs per cell or candidate cell, or a number of RSs per frequency, wherein
the transmitting section transmits the CSI report based on the configuration.

3. The terminal according to claim 1, wherein
the control section creates an RS index corresponding to a candidate cell and associated with at least one of configured RS indices, and
the transmitting section transmits a channel state information (CSI) report including the created RS index.

4. The terminal according to claim 1, wherein
the control section measures the RS for the L1-RSRP and the L1-SINR, and selects an RS to report, and
the transmitting section transmits the CSI report including only the L1-RSRP or only the L1-SINR of the selected RS.

5. A radio communication method for a terminal, the radio communication method comprising:
measuring at least one of a Layer 1 (L1)-Reference Signal Received Power (RSRP) and an L1-Signal to Interference plus Noise Ratio (SINR) of a reference signal (RS) over one or more frequencies or one or more cells; and
transmitting a channel state information (CSI) report including at least one of the L1-RSRP and the L1-SINR.

6. A base station comprising:
a transmitting section that transmits a configuration related to measurement of at least one of a Layer 1 (L1)-Reference Signal Received Power (RSRP) and an L1-Signal to Interference plus Noise Ratio (SINR) of a reference signal (RS) over one or more frequencies or one or more cells; and
a receiving section that receives a channel state information (CSI) report including at least one of the L1-RSRP and the L1-SINR.
